# EUROPÄISCHE PATENTSCHRIFT

(11) **EP 0 765 445 B1**
(45) Veröffentlichungstag und Bekanntmachung des Hinweises auf die Patenterteilung: **16.09.1998**
(21) Anmeldenummer: 95924325.4
(22) Anmeldetag: 26.06.1995
(51) Int. Cl.: F16H 3/091

(54) **VIELGÄNGIGES STUFENWECHSELGETRIEBE**
MULTI-SPEED STEPPED GEARBOX
BOITE DE VITESSES ETAGEE A PLUSIEURS RAPPORTS

(30) Priorität: 30.06.1994 DE 4422901
(43) Veröffentlichungstag der Anmeldung: 02.04.1997
(73) Patentinhaber: ZF FRIEDRICHSHAFEN Aktiengesellschaft, 88038 Friedrichshafen (DE)
(72) Erfinder: BIEBER, Gerold, D-88085 Langenargen (DE); STABEROH, Uwe, D-88046 Friedrichshafen (DE); EBNER, Otto, D-88048 Friedrichshafen (DE)
(74) Vertreter: Raue, Reimund
(86) Internationale Anmeldenummer: EP9502475
(87) Internationale Veröffentlichungsnummer: WO9600862

(56) Entgegenhaltungen:
- EP-A- 0 207 910
- EP-A- 0 224 407
- EP-A- 0 239 553
- EP-A- 0 562 227
- WO-A-94/07055
- DE-A- 3 415 525
- DE-A- 4 136 455
- GB-A- 1 217 659
- US-A- 1 944 682
- US-A- 4 856 375

## Beschreibung

Die Erfindung betrifft ein vielgängiges Stufenwechselgetriebe mit den im Oberbegriff des Anspruchs 1 genannten Merkmalen.

Bei Stufengetrieben herkömmlicher Bauart, wie sie üblicherweise für Kraftfahrzeuge mit Standardantrieb, d. h. mit vorne angeordnetem Antriebsmotor, eingesetzt werden, verwendet man meist eine Antriebswelle, in deren koaxialer Verlängerung sich die Abtriebswelle befindet. Parallel zu dieser Antriebs- bzw. Abtriebswelle befindet sich eine Vorgelege- oder Zwischenwelle und zwischen diesen beiden Wellenanordnungen kämmen so viele Radpaare, wie Gänge des Getriebes vorgesehen sind. Hinsichtlich des Rückwärtsganges bedient man sich üblicherweise eines Zwischen- oder Umkehrrades, das auf einer weiteren Welle frei drehbar gelagert ist.
Diese herkömmliche Bauart von Stufengetrieben führt jedoch zu sehr langen Getrieben, wenn das Getriebe mit einer Vielzahl von Gängen versehen werden soll.

Andererseits geht die Entwicklungsrichtung im modernen Kraftfahrzeugbau bei Stufengetrieben zu immer höheren Gangzahlen, weil es bei höheren Gangzahlen besser möglich ist, den optimalen und damit verbrauchsarmen Drehzahlbereich des Antriebsmotors auszunutzen.

Eine weitere Entwicklungsrichtung im modernen Getriebebau geht dahin, den Antriebsmotor und das Getriebe in baulicher Vereinigung quer zur Längsrichtung im Fahrzeug anzuordnen mit direktem Antrieb auf das Differential und die Räder. Aufgrund dessen bestehen im Getriebebau zwei unterschiedliche Forderungen, nämlich einerseits möglichst viele Gänge im Getriebe vorzusehen und andererseits dem Getriebe eine möglichst kurze axiale Ausdehnung zu verleihen.

Es sind zahlreiche Getriebe bekanntgeworden, bei denen nicht nur eine, sondern zwei oder mehr Zwischenwellen vorgesehen sind, um die verschiedenen Zahnradpaare in raumsparender Weise anordnen zu können.

So zeigt die EP-B-224 407 ein Sechsgang-Stufengetriebe mit insgesamt fünf zueinander parallelen Wellen. Diese fünf Wellen umfassen die Antriebswelle mit insgesamt sechs Festrädern, eine erste Zwischenwelle mit drei Losrädern und einem Festrad, eine zweite Zwischenwelle mit drei Losrädern und zwei Festrädern, eine dritte Zwischenwelle mit einem Umkehrrad für den Rückwärtsgang und schließlich eine Ausgangswelle mit einem Losrad, das über ein Differential mit der Abtriebswelle verbunden ist. Insgesamt umfaßt dieses Sechsgang-Getriebe daher siebzehn Zahnräder auf insgesamt fünf Wellen. Die axiale Baulänge wird durch die Welle mit den meisten Zahnrädern bestimmt, in diesem Fall durch die Antriebswelle mit den sechs Festrädern. Bei diesem Getriebe sind für den ersten, den zweiten, den dritten, den sechsten und den Rückwärtsgang jeweils separate Zahnradpaare vorgesehen, die jeweils aus einem Festrad der Antriebswelle und einem Losrad auf der ersten oder der zweiten Zwischenwelle bestehen. Im Falle des Rückwärtsganges ist noch das Umkehrrad auf der dritten Zwischenwelle zwischen das Festrad auf der Antriebswelle und das Festrad auf der zweiten Zwischenwelle geschaltet. Der gemeinsame Abtrieb von den Zwischenwellen auf die Ausgangswelle erfolgt über die beiden Festräder auf den Zwischenwellen, die gleichzeitig mit dem Differential-Zahnrad auf der Abtriebswelle kämmen. Lediglich für den vierten und fünften Gang ist eine Anordnung getroffen, bei der ein Festrad auf der Antriebswelle mit einem Losrad auf der zweiten Zwischenwelle kämmt. Durch selektives drehfestes Verbinden eines dieser Losräder mit der sie jeweils tragenden Zwischenwelle kann daher wahlweise der vierte oder der fünfte Gang eingelegt werden.
Die axiale Baulänge ist jedoch äußerst groß, insbesondere wegen der auf der Antriebswelle erforderlichen insgesamt sechs Zahnräder und der zusätzlich erforderlichen Zahnradebene für den Abtrieb.

Aus der EP-A-207 910 ist ein Fünfgang-Getriebe ähnlicher Bauart bekannt. Dabei ist für jeden einzelnen Gang, d. h. für die fünf Vorwärtsgänge und für den Rückwärtsgang, jeweils ein separates Zahnradpaar vorgesehen. Dies führt bei einer Antriebswelle, zwei Zwischenwellen und einer Abtriebswelle zu einem Bedarf von insgesamt fünfzehn Zahnrädern, von denen allein sechs nebeneinander auf der Antriebswelle angeordnet sind. Auch hier entsteht bezüglich der erforderlichen Zahnradebene für den Abtrieb eine ebenso große axiale Baulänge wie bei dem Sechsgang-Getriebe nach der EP-A-224 407, obwohl die EP-A-207 910 nur fünf Gangstufen aufweist.

Aus der EP-B-239 553 ist ein weiteres Fünfgang-Getriebe bekannt. Es weist nur zwei Zwischenwellen auf, weil der Rückwärtsgang dadurch gebildet wird, daß der Kraftfluß über zwei miteinander kämmende Losräder auf den Zwischenwellen geführt wird, von denen eines einen zweiten Zahnkranz für den ersten Gang trägt und bei eingeschaltetem Rückwärtsgang als Losrad läuft, während das andere Rad auf der anderen Zwischenwelle bei eingeschaltetem Rückwärtsgang mit dieser Zwischenwelle drehfest verbunden wird. Aber auch dieses Getriebe hat bei fünf Vorwärtsgängen immer noch eine erhebliche axiale Baulänge, weil sich auf der Antriebswelle fünf Zahnräder befinden, so daß sich gegenüber den oben genannten Getrieben nur eine geringfügig verminderte axiale Baulänge ergibt. Auch dieses Getriebe gebraucht für fünf Vorwärtsgänge noch vierzehn Zahnräder.

Aus der DE-A-41 36 455 ist ein Sechsgang-Getriebe bekannt, bei dem auf einer Antriebswelle vier Festräder nebeneinander angeordnet sind. Parallel dazu sind zwei Zwischenwellen vorgesehen, von denen eine erste Zwischenwelle vier als Losräder ausgebildete Zahnräder und ein als Festrad ausgebildetes Zahnrad aufweist. Die Losräder können mittels Schiebemuffen selektiv drehfest mit der ersten Zwischenwelle verbunden werden. Auf der zweiten Zwischenwelle sind drei als Losräder ausgebildete Zahnräder und ein als Festrad ausgebildetes Zahnrad vorgesehen. Auch hier können die Losräder über Schiebemuffen jeweils einzeln selektiv mit der zweiten Zwischenwelle verbunden werden. Ein Zahnrad der Antriebswelle kämmt mit einem Zahnrad der ersten Zwischenwelle und dieses wiederum mit einem Zahnrad der zweiten Zwischenwelle.
Auf den genannten Wellen sind jedoch auch bis zu fünf Zahnräder nebeneinander angeordnet, so daß sich eine gewisse axiale Baulänge zwangsläufig ergibt. Außerdem werden für das beschriebene Sechsgang-Getriebe immer noch vierzehn Zahnräder benötigt.

Zur Erhöhung der Gangzahl wird im modernen Getriebebau einem Hauptgetriebe ein Gruppengetriebe vor- oder nachgeschaltet. Diese Gruppengetriebe sind meist zweigängige Stufengetriebe. Sie dienen dazu, durch Mehrfachnutzung von Radsätzen neben der Gangzahl auch den Übersetzungsbereich des Gesamtgetriebes zu erhöhen.

Die EP-A-562 227 zeigt ein Getriebe gemäß dem Oberbegriff des Anspruchs 1 mit weniger Radpaaren als Schaltstufen. Dazu wird ein Gruppengetriebe verwendet, daß aus vorhandenen Gangradpaaren anderer Schaltstufen gebildet wird. Zusätzliche Radpaare für das Gruppengetriebe sind entbehrlich, so daß Herstellkosten und Bauraum klein gehalten werden können. Zum Schalten aller Vorwärtsgänge sind mindestens zwei Schaltkupplungen zu schließen. Auf zwei parallelen Wellen des Getriebes, einer Eingangs- und einer Ausgangswelle, ist jeweils eine Hohlwelle vorgesehen. Jede Hohlwelle ist über eine Synchronisierung mit der Eingangs- bzw. Ausgangswelle kuppelbar. Das Konzept benötigt zwei Ganzsynchronisierungen (also für jeweils zwei Gänge) und zwei Halbsynchronisierungen (also für jeweils einen Gang). Eine der Ganzsynchronisierungen (C-D) ist an allen Schaltungen von Vorwärtsgängen beteiligt. Durch ihre neutrale Nullage läßt sich aus jedem Gang unmittelbar durch Betätigen dieser Synchronisierung in den Leerlauf schalten und aus dem Leerlauf unmittelbar in jeden Gang. Durch die immer notwendige Verwendung dieser Synchronisierung bildet diese ein Gruppengetriebe. Auch bei dieser Getriebeanordnung ist für ein Sechsgang-Getriebe eine Zahl von dreizehn Zahnrädern notwendig, wozu auch das nicht gezeigte Rückwärtsgangrad zählt.

Der Erfindung liegt daher die Aufgabe zugrunde, ein Stufenwechselgetriebe der vorher genannten Art so weiterzubilden, daß die axiale Baulänge und die Anzahl der benötigten Zahnräder verringert wird.

Diese Aufgabe wird erfindungsgemäß dadurch gelöst, daß in einem Stufenwechselgetriebe die vorhandenen Zahnradpaare so in den Momentenfluß geschaltet werden, daß durch die unterschiedliche Kombination von Zahnradpaaren verschiedene Übersetzungsverhältnisse zu erzielen sind.

Hierbei ist zu berücksichtigen, daß im modernen Fahrzeugbau bereits kleinste Einsparungen an Abmessungen, Gewichten und Bauteilen zu ganz erheblichen Vorteilen führen können, beispielsweise dann, wenn durch ein neuartiges Getriebekonzept ein Einbau des Getriebes zusammen mit dem Motor quer zur Fahrtrichtung bei vorgegebener maximaler Fahrzeugbreite überhaupt erst ermöglicht wird.

Bei automatisch geschalteten Stufenwechselgetrieben, bei deren Schaltvorgängen eine Zugkraftunterbrechung stattfindet, werden diese Getriebe durch in einer elektronischen Steuereinrichtung erzeugte Signale geschaltet. Dabei ist eine Zwangsbindung an ein Schaltbild nicht mehr gegeben. Die Gangwahl, die der Fahrzeugführer vorgibt, wird von der elektronischen Steuereinrichtung in elektrische, hydraulische oder pneumatische Signale umgesetzt und von Schaltelementen in Bewegungen von Schaltkupplungen oder Synchronisiereinrichtungen gewandelt. Die Anordnung der Schaltelemente kann innerhalb des Getriebes frei gewählt werden. Schaltschema für den Fahrzeugführer und Schaltelementenanordnung im Getriebe sind voneinander unabhängig. Damit ist auch die freie Kombination verschiedener Schaltelemente auf unterschiedlichen Wellen in einer bisher unüblichen und bisher unsinnigen Form möglich. Das ermöglicht aber den Verlauf des Drehmoments innerhalb des Getriebes über Zahnräder, Wellen und Schaltelemente in einer bisher nicht gekannten Art und Weise. Es lassen sich Übersetzungsverhältnisse bilden, die sich aus den Kombinationen unterschiedlicher Gangstufen ergeben. Hierdurch wird ermöglicht, daß Fahrzeuggetriebe kompakt und trotzdem mit hoher Gangstufenzahl gebaut werden können, wobei individuelle Anforderungen und Bedürfnisse der Kraftfahrzeughersteller befriedigt werden können.

Von fast allen Herstellern von Schaltgetrieben, insbesondere von Schaltgetrieben für Nutzkraftfahrzeuge, werden heute automatisierte Schaltgetriebe mit einer Vielzahl von Gängen angeboten. Die Automatisierung führt für den Fahrzeugführer zu einer deutlichen Entlastung, da er sich beim Schaltvorgang nicht mehr mit Synchronisierungsvorgängen oder der Wahl der richtigen Schaltgasse beschäftigen muß, sondern seine Aufmerksamkeit in einem größeren Maße dem Straßenverkehrsgeschehen um ihn herum widmen kann.

In vielen Fällen sind bei den automatisierten Schaltgetrieben elektrische, hydraulische oder vor allem pneumatische Schaltvorrichtungen an ein Handschaltgetriebe angefügt worden. Der dafür zu betreibende Aufwand bedeutet hohe Kosten, verbunden mit einer nicht immer ausreichend gewährleisteten Zuverlässigkeit. Daneben sind die zur Verfügung stehende Gangstufenzahl und die in den wenigen Gangstufen, insbesondere bei leichteren Nutzkraftfahrzeugen, nicht ausreichende Zugkraft ein unbefriedigender und verbesserungsbedürftiger Zustand.

Automatisierte Getriebe verursachen durch ihre Bauteile höhere Kosten als vergleichbare Handschaltgetriebe, deshalb müssen die höheren Aufwendungen durch Einsparungen innerhalb des Getriebes kompensiert werden. Dazu bietet sich eine Reduktion von Standardbausteinen im Getriebe an, beispielsweise bei der Anzahl der verwendeten Zahnräder und Wellen. Dies darf aber nicht zu Lasten der verfügbaren Gangstufenzahl gehen.

Erfindungsgemäß wird vorgeschlagen, unter Verwendung einer automatisierten Schaltung ein Stufenwechselgetriebe so auszugestalten, daß die vorgesehenen Zahnradpaare in verschiedenen Gangstufen mehrfach genutzt werden. Dabei wird nicht ein in bisheriger Weise genutztes Hilfsgetriebe in Form eines Gruppengetriebes einem Hauptgetriebe vor- oder nachgeschaltet, um die Gangstufenzahl zu erhöhen.

Es wird eine automatisierte Schaltung vorausgesetzt, da in den Gangstufen mehrere Schaltpakete gleichzeitig angesteuert werden müssen. Diese Anforderung läßt sich auf vertretbare Weise von einer manuellen Schaltung nicht mehr bewerkstelligen.

Gegenüber bekannten Handschaltgetrieben kann mit den vorgeschlagenen, automatisch geschalteten Getrieben bei einer verringerten Zahnräderzahl und einer verringerten Wellenzahl eine erhöhte Gangstufenzahl im Vorwärtsgangbereich erreicht werden. Gleichzeitig lassen sich in den erfindungsgemäßen Konzeptionen eine Vielzahl von Rückwärtsgängen ermöglichen, was insbesondere im Zubringerdienst und Stadtverkehr einen großen Vorteil bringt. Bei den aufgezeigten Anwendungsfällen ist häufiges Rückwärtsfahren auch über größere Strecken durchaus üblich.

In einer vorteilhaften Ausgestaltung beinhaltet ein Getriebe mit acht Vorwärtsgängen und zwei Rückwärtsgängen elf Zahnräder, neun Schaltelemente und drei Wellen. Bei einem Standardeinbau des Getriebes vorne längs in Fahrtrichtung entfällt das eine Zahnrad zum Antrieb des Differentials. Demgegenüber weist ein übliches Handschaltgetriebe mit fünf Gängen fünfzehn Zahnräder, sechs Schaltelemente und vier Wellen inklusive Welle für den einen Rückwärtsgang auf. Daraus ist ersichtlich, daß sich bei deutlich vergrößerter Anzahl der Gangstufen die Zahl der benötigten Zahnräder und Wellen verringert. Demgegenüber ist lediglich eine gering erhöhte Zahl von Schaltelementen erforderlich, was allerdings auch durch die größere Zahl der schaltbaren Gangstufen bedingt ist.

Nach einer weiteren erfindungsgemäßen Anordnung beinhaltet ein Getriebe mit sechzehn Vorwärtsgängen und zwei Rückwärtsgängen fünfzehn Zahnräder, dreizehn Schaltelemente und vier Wellen. Demgegenüber weist ein übliches Handschaltgetriebe mit sechzehn Gängen zwanzig Zahnräder, neun Schaltelemente und fünf Wellen inklusive Welle für den Rückwärtsgang auf, aber ohne die Planetenbolzen und den Hohlradträger für das erforderliche Planetengetriebe. Durch den Wegfall des Planetengetriebes in der erfindungsgemäßen Ausgestaltung kann eine besonders kurze Baulänge erreicht werden. Weitere Nachteile eines Planetengetriebes, wie beispielsweise störende Geräusche, entfallen ebenfalls. Dennoch bleiben die Vorteile einer großen Stufung der Gänge erhalten.

Die Erfindung wird anhand von Figuren näher erläutert. Es zeigen:
- Fig. 1: die Darstellung des Getriebeschemas eines erfindungsgemäßen 8-Gang-Getriebes;
- Fig. 2: die verwendeten Schaltelemente in den jeweiligen Gangstufen gemäß Getriebeschema nach Fig. 1;
- Fig. 3: die Darstellung eines weiteren Getriebeschemas eines erfindungsgemäßen 8-Gang-Getriebes;
- Fig. 4: die verwendeten Schaltelemente in den jeweiligen Gangstufen gemäß Getriebeschema nach Fig. 3;
- Fig. 5: die Darstellung des Getriebeschemas eines erfindungsgemäßen 16-Gang-Getriebes;
- Fig. 6: eine Schnittdarstellung entlang der Linie I-I in Fig. 5;
- Fig. 7: die verwendeten Schaltelemente in den jeweiligen Gangstufen gemäß Getriebeschema nach Fig. 5;
- Fig. 8: die Darstellung eines weiteren Getriebeschemas eines erfindungsgemäßen 16-Gang-Getriebes;
- Fig. 9: die verwendeten Schaltelemente in den jeweiligen Gangstufen gemäß Getriebeschema nach Fig. 8;
- Fig. 10: die Darstellung eines geänderten Getriebeschemas nach Fig. 8 und
- Fig. 11: die verwendeten Schaltelemente in den jeweiligen Gangstufen gemäß Getriebeschema nach Fig. 10.

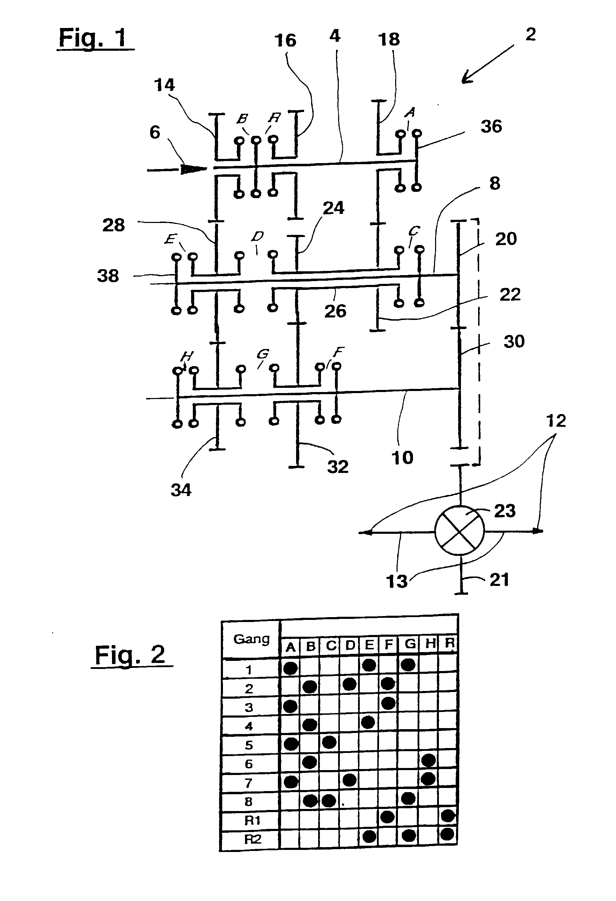

Die Fig. 1 zeigt ein erfindungsgemäßes Getriebeschema für ein 8-Gang-Getriebe. Das Getriebe 2 weist eine Antriebswelle 4 auf, der von einer hier nicht gezeigten Antriebsquelle, wie einer Brennkraftmaschine, über eine hier ebenfalls nicht dargestellte Kupplung Antriebsenergie zugeführt wird, wie durch den Pfeil 6 angedeutet.
Parallel zur Antriebswelle 4 sind eine erste Zwischenwelle 8 sowie eine zweite Zwischenwelle 10 angeordnet. Bei einer Standardanordnung des Getriebes, d. h. Getriebe in Fahrtrichtung längs eingebaut bei einem Fahrzeug mit Heckantrieb, kann die zweite Zwischenwelle 10 gleichzeitig die Abtriebswelle des Getriebes darstellen. Durch die Pfeile 12 wird die den Rädern über die Abtriebswellen 13 zugeführte Abtriebsenergie angedeutet. Auf der Antriebswelle 4 sind drei Losräder 14, 16, 18 angeordnet, die wahlweise einzeln der Antriebswelle 4 über Schaltelemente A, B oder R zugeschaltet werden können. Bei jedem der eingelegten Vorwärts- oder Rückwärtsgänge ist entweder das Schaltelement A oder B oder R als Verbindungselement zwischen der Antriebswelle 4 und den Losrädern 14, 16 oder 18 geschaltet. Dabei verbindet das Schaltelement R bei der Schaltung der beiden Rückwärtsgänge das Losrad 16 mit der Antriebswelle 4. Bei ungeraden Vorwärtsgängen wird das Losrad 18 über das Schaltelement A und bei geraden Vorwärtsgängen das Losrad 14 über das Schaltelement B mit der Antriebswelle 4 verbunden.

Auf der Zwischenwelle 8 ist ein Festrad 20 vorgesehen. Das Festrad 20 steht mit einem Zahnrad 21, das über ein Differential 23 mit den Abtriebswellen 13 verbunden ist, über Verzahnungen in Eingriff. Zwei Zahnräder 22 und 24 sind gemeinsam auf einem Losrad 26 angeordnet. Das Losrad 26 ist über ein Schaltelement C mit der Zwischenwelle 8 verbindbar. Ein weiteres Losrad 28 ist ebenfalls auf der Zwischenwelle 8 vorgesehen und mit dieser über ein Schaltelement E verbindbar. Ein ebenfalls an der Zwischenwelle 8 vorgesehenes Schaltelement D ermöglicht eine wahlweise Verbindung der Losräder 26 und 28. Das Losrad 28 ist über ein Schaltelement E der Zwischenwelle 8 zu- oder abkoppelbar.

Auf der Zwischenwelle 10 ist ein Festrad 30 angeordnet, das mit dem Festrad 20 der Zwischenwelle 8 über entsprechende Verzahnungen in Eingriff steht. Ebenfalls auf der Zwischenwelle 10 angeordnet sind zwei Losräder 32 und 34, von denen das Losrad 32 mit dem Zahnrad 24 am Losrad 26 der Zwischenwelle 8 und mit dem Losrad 16 der Eingangswelle 4 über entsprechende Verzahnungen in Eingriff steht. Dabei zeigt die Fig. 1 eine abgewickelte Darstellung des Getriebeschemas, bei der die Zahneingriffe nicht sämtlich darstellbar sind, weil die Wellen 4, 8 und 10 nicht in einer Ebene liegen.

Aufgrund der vorstehend geschilderten Anordnung der Zahnräder ergeben sich folgende Kraftflüsse in den einzelnen Gängen, wie sie in der Fig. 2 gezeigt sind: Im ersten Gang sind die Schaltelemente A, E und G aktiviert. Dazu wird von einer hier nicht gezeigten Steuereinrichtung ein Signal an eine nicht dargestellte Aktivierungsvorrichtung abgegeben, die in bekannter Weise die Schaltelemente in axialer Richtung parallel zu den Wellen betätigt. So wird beispielsweise die Schiebemuffe 36 des Schaltelementes A nach links bewegt und die Schiebemuffe 38 des Schaltelementes E wird nach rechts bewegt. Ebenfalls wird im Schaltelement G die Verbindung zwischen Losrad 32 und Losrad 34 geschlossen. Der Kraftfluß verläuft beim ersten Gang vom nicht gezeigten Antriebsmotor über eine ebenfalls nicht gezeigte Kupplungsvorrichtung auf die Eingangswelle 4, von dort über das Schaltelement A auf das Losrad 18, von dort auf das Zahnrad 22 des Losrades 26 und über das Zahnrad 24 des Losrades 26 auf das Losrad 32, von dort über das Schaltelement G zum Losrad 34 und über das Losrad 28 und das Schaltelement E auf die Zwischenwelle 8, von dort über das mit der Zwischenwelle 8 verbundene Festrad 20 auf das Zahnrad 21 und über das Differential 23 auf die Abtriebswellen 13.

Im zweiten Gang stellen drei andere Schaltelemente den Kraftfluß sicher. Der Kraftfluß verläuft beim zweiten Gang vom nicht gezeigten Antriebsmotor über eine ebenfalls nicht gezeigte Kupplungsvorrichtung auf die Eingangswelle 4, von dort über das Schaltelement B auf das Losrad 14, von dort über das Losrad 28 und das Schaltelement D auf das Zahnrad 24 des Losrades 26 und weiter über das Losrad 32 und das Schaltelement F auf die Zwischenwelle 10, von dort über die Festräder 30 und 20 auf das Zahnrad 21 und über das Differential 23 auf die Abtriebswellen 13.

Der Kraftfluß verläuft beim dritten Gang vom nicht gezeigten Antriebsmotor über die ebenfalls nicht gezeigte Kupplungsvorrichtung auf die Eingangswelle 4, von dort über das Schaltelement A auf das Losrad 18, von dort auf das Zahnrad 22 des Losrades 26 und über das Zahnrad 24 des Losrades 26 auf das Losrad 32 und über das Schaltelement F auf die Zwischenwelle 10, von dort über die Festräder 30 und 20 auf das Zahnrad 21 und über das Differential 23 auf die Abtriebswellen 13.

Im vierten Gang verläuft der Kraftfluß vom nicht gezeigten Antriebsmotor über die ebenfalls nicht gezeigte Kupplungsvorrichtung auf die Eingangswelle 4, von dort über das Schaltelement B auf das Losrad 14 und das Losrad 28, von dort über das Schaltelement E auf die Zwischenwelle 8 und über das Festrad 20 auf das Zahnrad 21 und über das Differential 23 auf die Abtriebswellen 13.

Im fünften Gang verläuft der Kraftfluß vom nicht gezeigten Antriebsmotor über die ebenfalls nicht gezeigte Kupplungsvorrichtung auf die Eingangswelle 4, von dort über das Schaltelement A auf das Losrad 18, von dort über das Zahnrad 22 des Losrades 26 und über das Schaltelement C auf das Festrad 20 der Zwischenwelle 8 und auf das Zahnrad 21 und über das Differential 23 auf die Abtriebswellen 13.

Der Kraftfluß verläuft beim sechsten Gang vom nicht gezeigten Antriebsmotor über die ebenfalls nicht gezeigte Kupplungsvorrichtung auf die Eingangswelle 4, von dort über das Schaltelement B und die Losräder 14, 28 und 34 sowie das Schaltelement H auf die Zwischenwelle 10, von dort über die Festräder 30 und 20 auf das Zahnrad 21 und über das Differential 23 auf die Abtriebswellen 13.

Im siebten Gang verläuft der Kraftfluß vom nicht gezeigten Antriebsmotor über eine ebenfalls nicht gezeigte Kupplungsvorrichtung auf die Eingangswelle 4, von dort über das Schaltelement A auf das Losrad 18, von dort über das Zahnrad 22 am Losrad 26 und über Schaltelement D und Losrad 28 auf das Losrad 34 und über das Schaltelement H auf die Zwischenwelle 10, von dort über die Festräder 30 und 20 auf das Zahnrad 21 und über das Differential 23 auf die Abtriebswellen 13.

Im achten Vorwärtsgang schließlich verläuft der Kraftfluß vom nicht gezeigten Antriebsmotor über die ebenfalls nicht gezeigte Kupplungsvorrichtung auf die Eingangswelle 4, von dort über das Schaltelement B auf das Losrad 14, von dort über die Losräder 28 und 34 und das Schaltelement G auf das Losrad 32, von dort über das Zahnrad 24 am Losrad 26 und über das Schaltelement C auf die Zwischenwelle 8 und das Festrad 20 und auf das Zahnrad 21 und über das Differential 23 auf die Abtriebswellen 13.

Für die Rückwärtsfahrt stehen zwei Rückwärtsgänge zur Verfügung.
Im ersten Rückwärtsgang verläuft der Kraftfluß vom nicht gezeigten Antriebsmotor über die ebenfalls nicht gezeigte Kupplungsvorrichtung auf die Eingangswelle 4, von dort über das Schaltelement R auf das Losrad 16, von dort auf das Losrad 32 und über das Schaltelement F auf die Zwischenwelle 10, von dort über die Festräder 30 und 20 auf das Zahnrad 21 und über das Differential 23 auf die Abtriebswellen 13.
Der Kraftfluß verläuft beim zweiten Rückwärtsgang vom nicht gezeigten Antriebsmotor über die ebenfalls nicht gezeigte Kupplungsvorrichtung auf die Eingangswelle 4, von dort über das Schaltelement R auf das Losrad 16, von dort auf das Losrad 32 und über das Schaltelement G auf das Losrad 34, von dort über das Losrad 28 und das Schaltelement E auf die Zwischenwelle 8 und über das Festrad 20 auf das Zahnrad 21 und über das Differential 23 auf die Abtriebswellen 13.

Aus der Darstellung der Fig. 1 ist zu erkennen, daß auf der Eingangswelle 4 drei Losräder 14, 16 und 18 vorgesehen sind, auf der Zwischenwelle 8 ein Losrad 28, zwei Zahnräder 22 und 24 zusammen auf einem Losrad 26 und ein Festrad 20 angeordnet sind und auf der Zwischenwelle 10 zwei Losräder 32 und 34 und ein Festrad 30 vorgesehen sind. Am Differential 23 ist ein Zahnrad 21 angeordnet. Damit lassen sich überraschenderweise mit nur elf Zahnrädern acht Vorwärtsgangübersetzungen und zwei Rückwärtsgangübersetzungen erreichen.

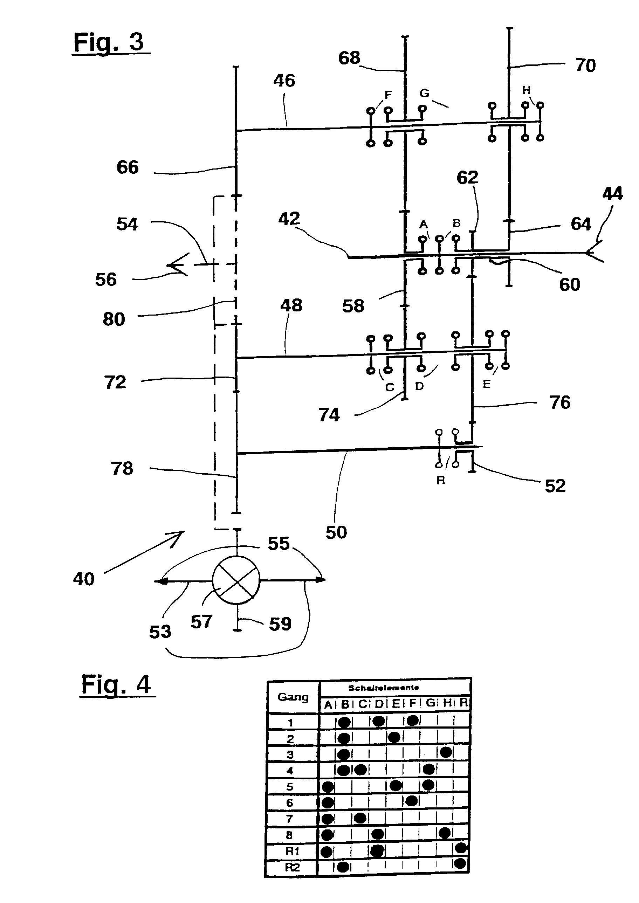

Die Fig. 3 zeigt eine weitere Ausgestaltung eines erfindungsgemäßen Getriebeschemas für ein 8-Gang-Getriebe. Dabei weist das Getriebe 40 eine Antriebswelle 42 auf, der von einer hier nicht gezeigten Antriebsquelle, wie einer Brennkraftmaschine, über eine hier ebenfalls nicht dargestellte Kupplung Antriebsenergie zugeführt wird, wie durch den Pfeil 44 angedeutet.
Parallel zur Antriebswelle 42 sind eine erste Zwischenwelle 46, eine zweite Zwischenwelle 48, eine dritte Zwischenwelle 50, die das Rückwärtsgangrad 52 trägt, sowie die Abtriebswellen 53 angeordnet. Durch die Pfeile 55 wird die den Rädern zugeführte Abtriebsenergie angedeutet. Bei einer Anordnung Motor und Getriebe in Fahrtrichtung längs eingebaut bei einem Fahrzeug mit Heckantrieb, ist parallel zur Antriebswelle 42 eine Abtriebswelle 54 angeordnet, wobei dann durch den Pfeil 56 die den Rädern zugeführte Abtriebsenergie angedeutet wird. Die Abtriebswellen 53 sind über ein Differential 57 mit einem Zahnrad 59 verbunden. Auf der Antriebswelle 42 sind zwei Losräder 58 und 60 angeordnet, die wahlweise einzeln der Antriebswelle 42 über Schaltelemente A oder B zugeschaltet werden können. Das Losrad 60 trägt dabei zwei Zahnräder 62 und 64 mit unterschiedlichem Durchmesser und unterschiedlicher Zähnezahl. Bei jedem der eingelegten Vorwärts- oder Rückwärtsgänge ist entweder das Schaltelement A oder B als Verbindungselement zwischen der Antriebswelle 42 und den Losrädern 58 oder 60 geschaltet. Bei den ersten vier Vorwärtsgängen und beim zweiten Rückwärtsgang wird das Losrad 60 über das Schaltelement B und bei den Vorwärtsgängen fünf bis acht und beim ersten Rückwärtsgang wird das Losrad 58 über das Schaltelement A mit der Antriebswelle 42 verbunden.

Auf der Zwischenwelle 46 ist ein Festrad 66 und zwei Losräder 68 und 70 vorgesehen. Das Losrad 68 ist über ein Schaltelement F mit der Zwischenwelle 46 verbindbar. Das weitere Losrad 70 ist mit der Zwischenwelle 46 über ein Schaltelement H verbindbar. Ein ebenfalls an der Zwischenwelle 46 vorgesehenes Schaltelement G ermöglicht eine wahlweise Verbindung der Losräder 68 und 70.

Auf der Zwischenwelle 48 ist ein Festrad 72 und zwei Losräder 74 und 76 vorgesehen. Das Losrad 74 ist über ein Schaltelement C mit der Zwischenwelle 48 verbindbar. Das weitere Losrad 76 ist mit der Zwischenwelle 48 über ein Schaltelement E verbindbar. Ein ebenfalls an der Zwischenwelle 48 vorgesehenes Schaltelement D ermöglicht eine wahlweise Verbindung der Losräder 74 und 76.

Auf der Zwischenwelle 50 ist ein Festrad 78 und das Losrad 52 für die Rückwärtsgangübersetzungen angeordnet. Das Losrad 52 ist mit der Zwischenwelle 50 wahlweise über ein Schaltelement R verbindbar.

Wenn eine Abtriebswelle 54 vorgesehen ist, dann ist auf der Abtriebswelle 54 ein Festrad 80 angeordnet, das mit dem Festrad 66 der Zwischenwelle 46 und mit dem Festrad 72 der Zwischenwelle 48 über entsprechende Verzahnungen in Eingriff steht.

Bei der Anordnung mit Differential 57 entfällt Abtriebswelle 54 und Festrad 80. Daher sind in Fig. 3 das Festrad 80 und die Abtriebswelle 54 nur mit Strichlinie dargestellt. Statt dessen steht das Festrad 72 der Zwischenwelle 48 mit dem Zahnrad 59 am Differential 57 über entsprechende Verzahnungen in Eingriff. Ebenfalls steht dann das Festrad 66 der Zwischenwelle 46 mit dem Zahnrad 59 über entsprechende Verzahnungen in Eingriff.

Das Festrad 78 der Zwischenwelle 50 steht mit dem Festrad 72 der Zwischenwelle 48 über entsprechende Verzahnungen in Eingriff. Das Losrad 58 der Antriebswelle 42 ist mit dem Losrad 68 der Zwischenwelle 46 und dem Losrad 74 der Zwischenwelle 48 über entsprechende Verzahnungen in Eingriff. Das Losrad 76 der Zwischenwelle 48 steht mit dem Losrad 52 der Zwischenwelle 50 und dem Zahnrad 62 am Losrad 60 der Antriebswelle 42 über entsprechende Verzahnungen in Eingriff. Schließlich steht noch das Zahnrad 64 am Losrad 60 der Antriebswelle 42 mit dem Losrad 70 der Zwischenwelle 46 über entsprechende Verzahnungen in Eingriff.

Dabei zeigt die Fig. 3 eine abgewickelte Darstellung des Getriebeschemas, bei der die Zahneingriffe nicht sämtlich darstellbar sind, weil die Wellen 42, 46, 48, 50 und 53 oder 54 nicht in einer Ebene liegen.

Aufgrund der vorstehend geschilderten Anordnung der Zahnräder ergeben sich folgende Kraftflüsse in den einzelnen Gängen, wie sie in der Schaltelemententabelle in der Fig. 4 gezeigt sind:
Im ersten Gang sind die Schaltelemente B, D und F aktiviert. Dazu wird von einer hier nicht gezeigten Steuereinrichtung ein Signal an eine nicht dargestellte Aktivierungsvorrichtung abgegeben, die in bekannter Weise die Schaltelemente in axialer Richtung parallel zu den Wellen betätigt. Der Kraftfluß verläuft beim ersten Gang vom nicht gezeigten Antriebsmotor über eine ebenfalls nicht gezeigte Kupplungsvorrichtung auf die Eingangswelle 42, von dort über das Schaltelement B auf das Zahnrad 62 am Losrad 60, von dort auf das Losrad 76 und über das Schaltelement D zum Losrad 74 und über die Losräder 58 und 68 und das Schaltelement F auf die Zwischenwelle 46, von dort über das mit der Zwischenwelle 46 verbundene Festrad 66 auf das Zahnrad 59 und über das Differential 57 auf die Abtriebswellen 56.

Der Kraftfluß verläuft beim zweiten Gang vom nicht gezeigten Antriebsmotor über die ebenfalls nicht gezeigte Kupplungsvorrichtung auf die Eingangswelle 42, von dort über das Schaltelement B auf das Zahnrad 62 am Losrad 60, von dort über das Losrad 76 und das Schaltelement E auf die Zwischenwelle 48 und von dort über das mit der Zwischenwelle 48 verbundene Festrad 72 auf das Zahnrad 59 und über das Differential 57 auf die Abtriebswellen 56.

Der Kraftfluß verläuft beim dritten Gang vom nicht gezeigten Antriebsmotor über die ebenfalls nicht gezeigte Kupplungsvorrichtung auf die Eingangswelle 42, von dort über das Schaltelement B auf das Zahnrad 62 am Losrad 60, von dort auf das Zahnrad 64 am Losrad 60 und auf das Losrad 70 und über das Schaltelement H auf die Zwischenwelle 46, von dort über das auf der Zwischenwelle 46 angeordnete Festrad 66 auf das Zahnrad 59 und über das Differential 57 auf die Abtriebswellen 56.

Im vierten Gang verläuft der Kraftfluß vom nicht gezeigten Antriebsmotor über die ebenfalls nicht gezeigte Kupplungsvorrichtung auf die Eingangswelle 42, von dort über das Schaltelement B auf das Zahnrad 62 am Losrad 60 und das Zahnrad 64 am Losrad 60, von dort auf das Losrad 70 und über das Schaltelement G auf das Losrad 68, von dort über das Losrad 58 auf das Losrad 74 und weiter über das Schaltelement C auf die Zwischenwelle 48 und über das Festrad 72 auf das Zahnrad 59 und über das Differential 57 auf die Abtriebswellen 56.

Im fünften Gang verläuft der Kraftfluß vom nicht gezeigten Antriebsmotor über die ebenfalls nicht gezeigte Kupplungsvorrichtung auf die Eingangswelle 42, von dort über das Schaltelement A auf das Losrad 58, von dort über das Losrad 68 und das Schaltelement G auf das Losrad 70, weiter über das Zahnrad 64 des Losrades 60 und über das Zahnrad 62 am Losrad 60 auf das Losrad 76 und über das Schaltelement E und die Zwischenwelle 48 auf das Festrad 72 der Zwischenwelle 48 und auf das Zahnrad 59 und über das Differential 57 auf die Abtriebswellen 56.

Der Kraftfluß verläuft beim sechsten Gang vom nicht gezeigten Antriebsmotor über die ebenfalls nicht gezeigte Kupplungsvorrichtung auf die Eingangswelle 42, von dort über das Schaltelement A und die Losräder 58 und 68 sowie das Schaltelement F auf die Zwischenwelle 46 und über das damit verbundene Festrad 66 auf das Zahnrad 59 und über das Differential 57 auf die Abtriebswellen 56.

Im siebten Gang verläuft der Kraftfluß vom nicht gezeigten Antriebsmotor über die ebenfalls nicht gezeigte Kupplungsvorrichtung auf die Eingangswelle 42, von dort über das Schaltelement A auf das Losrad 58, von dort über das Losrad 74 und über Schaltelement C auf die Zwischenwelle 48 und das damit verbundene Festrad 72, von dort über das Zahnrad 59 und über das Differential 57 auf die Abtriebswellen 56.

Im achten Vorwärtsgang schließlich verläuft der Kraftfluß vom nicht gezeigten Antriebsmotor über die ebenfalls nicht gezeigte Kupplungsvorrichtung auf die Eingangswelle 42, von dort über das Schaltelement A auf das Losrad 58 und das Losrad 74, von dort über das Schaltelement D und das Losrad 76 auf das Zahnrad 62 am Losrad 60 und über das Zahnrad 64 am Losrad 60 auf das Losrad 70, von dort weiter über das Schaltelement H auf die Zwischenwelle 46 und das Festrad 66 und schließlich auf das Zahnrad 59 und über das Differential 57 auf die Abtriebswellen 56.

Für die Rückwärtsfahrt stehen vorzugsweise zwei Rückwärtsgänge zur Verfügung. Eine Veränderung der Übersetzungsverhältnisse läßt auch andere Kombinationen von Zahnrädern zu.
Im ersten Rückwärtsgang verläuft der Kraftfluß vom nicht gezeigten Antriebsmotor über die ebenfalls nicht gezeigte Kupplungsvorrichtung auf die Eingangswelle 42, von dort über das Schaltelement A auf das Losrad 58, von dort beispielsweise auf das Losrad 74 und über das Schaltelement D auf das Losrad 76, von dort auf das Losrad 52 und über das Schaltelement R auf die Zwischenwelle 50, von dort über die Festräder 78 und 72 auf das Zahnrad 59 und über das Differential 57 auf die Abtriebswellen 56.

Der Kraftfluß verläuft beim zweiten Rückwärtsgang vom nicht gezeigten Antriebsmotor über die ebenfalls nicht gezeigte Kupplungsvorrichtung auf die Eingangswelle 42, von dort über das Schaltelement B auf das Zahnrad 62 am Losrad 60, von dort auf das Losrad 76 und über das Losrad 52 und das Schaltelement R auf die Zwischenwelle 50 und über die Festräder 78 und 72 auf das Zahnrad 59 und über das Differential 57 auf die Abtriebswellen 56.

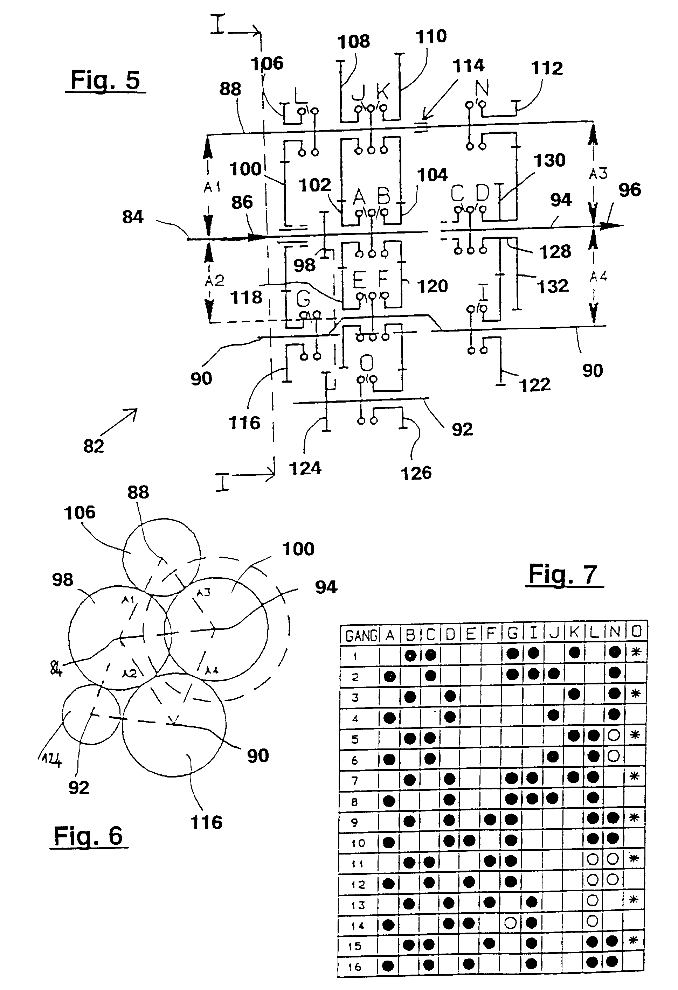

Die Fig. 5 zeigt eine Ausgestaltung eines erfindungsgemäßen Getriebeschemas für ein 16-Gang-Getriebe.
Dabei weist das Getriebe 82 eine Antriebswelle 84 auf, der von einer hier nicht gezeigten Antriebsquelle, wie einer Brennkraftmaschine, über eine hier ebenfalls nicht dargestellte Kupplung Antriebsenergie zugeführt wird, wie durch den Pfeil 86 angedeutet.
Parallel zur Antriebswelle 84 sind eine erste Zwischenwelle 88, eine zweite Zwischenwelle 90, eine dritte Zwischenwelle 92 sowie die Abtriebswelle 94 angeordnet. Durch den Pfeil 96 wird die den Rädern zugeführte Abtriebsenergie angedeutet. Auf der Antriebswelle 84 sind ein Festrad 98 und zwei Losräder 102 und 104 angeordnet, wobei die Losräder 102 und 104 einzeln der Antriebswelle 82 über Schaltelemente A oder B zugeschaltet werden können. Bei jedem der eingelegten Vorwärts- oder Rückwärtsgänge ist entweder das Schaltelement A oder B als Verbindungselement zwischen der Antriebswelle 84 und den Losrädern 102 oder 104 geschaltet. Bei den geraden Vorwärtsgängen wird das Losrad 102 über das Schaltelement A und bei den ungeraden Vorwärtsgängen wird das Losrad 104 über das Schaltelement B mit der Antriebswelle 94 verbunden. Bei allen Rückwärtsgängen hingegen sind weder Schaltelement A noch Schaltelement B betätigt. Bei deren Neutralstellung sind die Kombinationen der Schaltelemente der ungeraden Vorwärtsgänge auch die Kombinationen der Schaltelemente der Rückwärtsgänge, wenn gleichzeitig das Schaltelement O betätigt ist. Das führt zu einer Gesamtzahl von acht möglichen Rückwärtsgängen.

Auf der Zwischenwelle 88 sind vier Losräder 106, 108, 110 und 112 vorgesehen. Das Losrad 106 ist über ein Schaltelement L mit der Zwischenwelle 88 verbindbar. Das weitere Losrad 108 ist mit der Zwischenwelle 88 über ein Schaltelement J verbindbar. Das weitere Losrad 110 ist mit der Zwischenwelle 88 über ein Schaltelement K verbindbar. Das weitere Losrad 112 ist mit der Zwischenwelle 88 über ein Schaltelement N verbindbar. Die Zwischenwelle 88 kann an einer Stelle 114 trennbar ausgeführt sein, sie wird im weiteren aber als eine Zwischenwelle 88 angesprochen werden.

Auf der Zwischenwelle 90 sind vier Losräder 116, 118, 120 und 122 vorgesehen. Das Losrad 116 ist über ein Schaltelement G mit der Zwischenwelle 90 verbindbar. Das weitere Losrad 118 ist mit der Zwischenwelle 90 über ein Schaltelement E verbindbar. Das weitere Losrad 120 ist mit der Zwischenwelle 90 über ein Schaltelement F verbindbar. Das weitere Losrad 122 ist mit der Zwischenwelle 90 über ein Schaltelement I verbindbar. Die Zwischenwelle 90 ist im Bereich der Schaltelemente E und F aus darstellerischen Gründen versetzt gezeigt.

Auf der Zwischenwelle 92 ist ein Festrad 124 und ein Losrad 126 für die Rückwärtsgangübersetzungen angeordnet. Das Losrad 126 ist mit der Zwischenwelle 92 wahlweise über ein Schaltelement O verbindbar. Das Festrad 124 steht mit dem Festrad 98 der Antriebswelle 84 über eine entsprechende Verzahnung in Eingriff.

Auf der Abtriebswelle 94 sind zwei Losräder 100 und 128 angeordnet, wobei das Losrad 128 zwei Zahnräder 130 und 132 trägt. Das Losrad 100 kann über das Schaltelement C der Abtriebswelle 94 zugeschaltet werden und das Losrad 128 ist mit der Abtriebswelle 94 über ein Schaltelement D verbindbar. Das Zahnrad 132 steht mit dem Losrad 112 der Zwischenwelle 88 über entsprechende Verzahnungen in Eingriff und das Zahnrad 130 mit dem Losrad 122 der Zwischenwelle 90.
Ebenfalls steht das Losrad 104 der Antriebswelle 84 mit dem Losrad 110 der Zwischenwelle 88 und dem Losrad 120 der Zwischenwelle 90 über entsprechende Verzahnungen in Eingriff. Das Losrad 120 der Zwischenwelle 90 wiederum steht mit dem Losrad 126 der Zwischenwelle 92 über entsprechende Verzahnungen in Eingriff. Ebenfalls steht das Losrad 102 der Antriebswelle 84 mit dem Losrad 108 der Zwischenwelle 88 und dem Losrad 118 der Zwischenwelle 90 über entsprechende Verzahnungen in Eingriff.
Ebenfalls steht das Losrad 100 der Abtriebswelle 94 mit dem Losrad 106 der Zwischenwelle 88 und dem Losrad 116 der Zwischenwelle 90 über entsprechende Verzahnungen in Eingriff. Schließlich steht noch das Festrad 98 der Antriebswelle 84 mit dem Festrad 124 der Zwischenwelle 92 über entsprechende Verzahnungen in Eingriff.

Dabei zeigt die Fig. 5 eine abgewickelte Darstellung des Getriebeschemas, bei der die Zahneingriffe nicht sämtlich darstellbar sind, weil die Wellen 84, 88, 90, 92 und 94 nicht in einer Ebene liegen. Die Antriebswelle 84 und die Abtriebswelle 94 liegen in Fig. 6 seitlich nebeneinander. Vorteilhafterweise wird die Abtriebswelle 94 jedoch unterhalb der Antriebswelle 84 angeordnet werden.

Aufgrund der vorstehend geschilderten Anordnung der Zahnräder ergeben sich folgende Kraftflüsse in den einzelnen Gängen, wie sie in der Schaltelemententabelle in der Fig. 7 gezeigt sind. Dabei sind die in der rechten Spalte (O) angegebenen Sterne (*) kennzeichnend für die einzelnen Rückwärtsgangübersetzungen, die bei aktiviertem Schaltelement O und den angegebenen, gleichzeitig aktivierten Schaltelementen C - N der ungeraden Vorwärtsgangstufen schaltbar sind, wobei die Schaltelemente A und B nicht aktiviert sind. Die nicht ausgefüllten Kreise in den Spalten (G), (L) und (N) stehen für Schaltelemente, deren Aktivierung für den Kraftfluß nicht erforderlich sind, deren Aktivierung aber eine Hilfsfunktion beim Schalten darstellen kann, beispielsweise zum Abbremsen der Wellen beim Synchronisiervorgang, also eine Verteilung der Synchronisierkräfte auf mehrere Schaltelemente vorgenommen wird.

Im ersten Gang sind die Schaltelemente B, C, G, I und K aktiviert. Dazu wird von einer hier nicht gezeigten Steuereinrichtung ein Signal an eine nicht dargestellte Aktivierungsvorrichtung abgegeben, die in bekannter Weise die Schaltelemente in axialer Richtung parallel zu den Wellen betätigt. Der Kraftfluß verläuft beim ersten Gang vom nicht gezeigten Antriebsmotor über eine ebenfalls nicht gezeigte Kupplungsvorrichtung auf die Eingangswelle 84, von dort über das Schaltelement B auf das Losrad 104, von dort auf das Losrad 110 und über das Schaltelement K auf die Zwischenwelle 88, von dort über das Schaltelement N auf das Losrad 112, von dort über die Zahnräder 132 und 130 am Losrad 128 auf das Losrad 122 und über das Schaltelement I auf die Zwischenwelle 90, dann über das Schaltelement G und das Losrad 116 auf das Losrad 100 und über das Schaltelement C auf die Abtriebswelle 94, die mit hier nicht angeführten weiteren Komponenten des Anstriebsstrangs verbunden ist.

Der Kraftfluß verläuft beim zweiten Gang vom nicht gezeigten Antriebsmotor über die ebenfalls nicht gezeigte Kupplungsvorrichtung auf die Eingangswelle 84, von dort über das Schaltelement A auf das Losrad 102, von dort auf das Losrad 108 und über das Schaltelement J auf die Zwischenwelle 88, von dort über das Schaltelement N auf das Losrad 112, von dort über die Zahnräder 132 und 130 am Losrad 128 auf das Losrad 122 und über das Schaltelement I auf die Zwischenwelle 90, dann über das Schaltelement G und das Losrad 116 auf das Losrad 100 und über das Schaltelement C auf die Abtriebswelle 94.

Der Kraftfluß verläuft beim dritten Gang vom nicht gezeigten Antriebsmotor über die ebenfalls nicht gezeigte Kupplungsvorrichtung auf die Eingangswelle 84, von dort über das Schaltelement B auf das Losrad 104, von dort auf das Losrad 110 und über das Schaltelement K auf die Zwischenwelle 88, von dort über das Schaltelement N auf das Losrad 112, von dort über das Zahnrad 132 am Losrad 128 und über das Schaltelement D auf die Abtriebswelle 94.

Im vierten Gang verläuft der Kraftfluß vom nicht gezeigten Antriebsmotor über die ebenfalls nicht gezeigte Kupplungsvorrichtung auf die Eingangswelle 84, von dort über das Schaltelement A auf das Losrad 102, von dort auf das Losrad 108 und über das Schaltelement J auf die Zwischenwelle 88, von dort über das Schaltelement N auf das Losrad 112, von dort über das Zahnrad 132 am Losrad 128 und über das Schaltelement D auf die Abtriebswelle 94.

Im fünften Gang verläuft der Kraftfluß vom nicht gezeigten Antriebsmotor über die ebenfalls nicht gezeigte Kupplungsvorrichtung auf die Eingangswelle 84, von dort über das Schaltelement B auf das Losrad 104, von dort auf das Losrad 110 und über das Schaltelement K auf die Zwischenwelle 88, von dort über das Schaltelement L und das Losrad 106 auf das Losrad 100 und über das Schaltelement C auf die Abtriebswelle 94.

Der Kraftfluß verläuft beim sechsten Gang vom nicht gezeigten Antriebsmotor über die ebenfalls nicht gezeigte Kupplungsvorrichtung auf die Eingangswelle 84, von dort über das Schaltelement A auf das Losrad 102, von dort auf das Losrad 108 und über das Schaltelement J auf die Zwischenwelle 88, von dort über das Schaltelement L und das Losrad 106 auf das Losrad 100 und über das Schaltelement C auf die Abtriebswelle 94. Das Schaltelement N kann mitaktiviert werden, beispielsweise zur Unterstützung der Ansynchronisierung.

Im siebten Gang verläuft der Kraftfluß vom nicht gezeigten Antriebsmotor über die ebenfalls nicht gezeigte Kupplungsvorrichtung auf die Eingangswelle 84, von dort über das Schaltelement B auf das Losrad 104, von dort auf das Losrad 110 und über das Schaltelement K auf die Zwischenwelle 88, von dort über das Schaltelement L auf das Losrad 106, von dort über die Losräder 100 und 116 und über das Schaltelement G auf die Zwischenwelle 90, dann über das Schaltelement I und das Losrad 122 auf das Zahnrad 130 am Losrad 128 und über das Schaltelement D auf die Abtriebswelle 94.

Im achten Vorwärtsgang verläuft der Kraftfluß vom nicht gezeigten Antriebsmotor über die ebenfalls nicht gezeigte Kupplungsvorrichtung auf die Eingangswelle 84, von dort über das Schaltelement A auf das Losrad 102, von dort auf das Losrad 108 und über das Schaltelement J auf die Zwischenwelle 88, von dort über das Schaltelement L auf das Losrad 106, von dort über die Losräder 100 und 116 und über das Schaltelement G auf die Zwischenwelle 90, dann über das Schaltelement I und das Losrad 122 auf das Zahnrad 130 am Losrad 128 und über das Schaltelement D auf die Abtriebswelle 94.

Im neunten Gang verläuft der Kraftfluß vom nicht gezeigten Antriebsmotor über die ebenfalls nicht gezeigte Kupplungsvorrichtung auf die Eingangswelle 84, von dort über das Schaltelement B auf das Losrad 104, von dort auf das Losrad 120 und über das Schaltelement F auf die Zwischenwelle 90, von dort über das Schaltelement G auf das Losrad 116, von dort über die Losräder 100 und 106 und über das Schaltelement L auf die Zwischenwelle 88, dann über das Schaltelement N und das Losrad 112 auf das Zahnrad 132 am Losrad 128 und über das Schaltelement D auf die Abtriebswelle 94.

Im zehnten Vorwärtsgang verläuft der Kraftfluß vom nicht gezeigten Antriebsmotor über die ebenfalls nicht gezeigte Kupplungsvorrichtung auf die Eingangswelle 84, von dort über das Schaltelement A auf das Losrad 102, von dort auf das Losrad 118 und über das Schaltelement E auf die Zwischenwelle 90, von dort über das Schaltelement G auf das Losrad 116, von dort über die Losräder 100 und 106 und über das Schaltelement L auf die Zwischenwelle 88, dann über das Schaltelement N und das Losrad 112 auf das Zahnrad 132 am Losrad 128 und über das Schaltelement D auf die Abtriebswelle 94.

Der Kraftfluß verläuft beim elften Gang vom nicht gezeigten Antriebsmotor über eine ebenfalls nicht gezeigte Kupplungsvorrichtung auf die Eingangswelle 84, von dort über das Schaltelement B auf das Losrad 104, von dort auf das Losrad 120 und über das Schaltelement F auf die Zwischenwelle 90, von dort über das Schaltelement G und das Losrad 116 auf das Losrad 100 und über das Schaltelement C auf die Abtriebswelle 94.

Der Kraftfluß verläuft beim zwölften Gang vom nicht gezeigten Antriebsmotor über die ebenfalls nicht gezeigte Kupplungsvorrichtung auf die Eingangswelle 84, von dort über das Schaltelement A auf das Losrad 102, von dort auf das Losrad 118 und über das Schaltelement E auf die Zwischenwelle 90, von dort über das Schaltelement G und das Losrad 116 auf das Losrad 100 und über das Schaltelement C auf die Abtriebswelle 94.

Im dreizehnten Gang verläuft der Kraftfluß vom nicht gezeigten Antriebsmotor über die ebenfalls nicht gezeigte Kupplungsvorrichtung auf die Eingangswelle 84, von dort über das Schaltelement B auf das Losrad 104, von dort auf das Losrad 120 und über das Schaltelement F auf die Zwischenwelle 90, dann über das Schaltelement I und das Losrad 122 auf das Zahnrad 130 am Losrad 128 und über das Schaltelement D auf die Abtriebswelle 94.

Im vierzehnten Gang verläuft der Kraftfluß vom nicht gezeigten Antriebsmotor über die ebenfalls nicht gezeigte Kupplungsvorrichtung auf die Eingangswelle 84, von dort über das Schaltelement A auf das Losrad 102, von dort auf das Losrad 118 und über das Schaltelement E auf die Zwischenwelle 90, dann über das Schaltelement I und das Losrad 122 auf das Zahnrad 130 am Losrad 128 und über das Schaltelement D auf die Abtriebswelle 94.

Der Kraftfluß verläuft beim fünfzehnten Gang vom nicht gezeigten Antriebsmotor über eine ebenfalls nicht gezeigte Kupplungsvorrichtung auf die Eingangswelle 84, von dort über das Schaltelement B auf das Losrad 104, von dort auf das Losrad 120 und über das Schaltelement F auf die Zwischenwelle 90, von dort über das Schaltelement I auf das Losrad 122, von dort über die Zahnräder 130 und 132 am Losrad 128 auf das Losrad 112 und über das Schaltelement N auf die Zwischenwelle 88, dann über das Schaltelement L und das Losrad 106 auf das Losrad 100 und über das Schaltelement C auf die Abtriebswelle 94.

Der Kraftfluß verläuft beim sechzehnten Gang vom nicht gezeigten Antriebsmotor über die ebenfalls nicht gezeigte Kupplungsvorrichtung auf die Eingangswelle 84, von dort über das Schaltelement A auf das Losrad 102, von dort auf das Losrad 118 und über das Schaltelement E auf die Zwischenwelle 90, von dort über das Schaltelement I auf das Losrad 122, von dort über die Zahnräder 130 und 132 am Losrad 128 auf das Losrad 112 und über das Schaltelement N auf die Zwischenwelle 88, dann über das Schaltelement L und das Losrad 106 auf das Losrad 100 und über das Schaltelement C auf die Abtriebswelle 94.

Für die acht möglichen Rückwärtsgangübersetzungen sei hier nur die erste stellvertretend beschrieben. Die weiteren Übersetzungen lassen sich aus dem bereits oben Dargestellten durch Kombination des Schaltelementes O mit den anderen Schaltelementen der ungeraden Vorwärtsgangstufen erzielen, wobei jeweils die Schaltelemente A und B sich in Neutralstellung befinden, also nicht aktiviert sind. Der Kraftfluß beim ersten Rückwärtsgang vom nicht gezeigten Antriebsmotor über die ebenfalls nicht gezeigte Kupplungsvorrichtung auf die Eingangswelle 84, von dort über die Festräder 98 und 124 auf die Zwischenwelle 92, von dort über das Schaltelement O auf die Losräder 126, 120, 104 und 110 und über das Schaltelement K auf die Zwischenwelle 88, von dort über das Schaltelement N auf das Losrad 112, von dort über die Zahnräder 132 und 130 am Losrad 128 auf das Losrad 122 und über das Schaltelement I auf die Zwischenwelle 90, dann über das Schaltelement G und das Losrad 116 auf das Losrad 100 und über das Schaltelement C auf die Abtriebswelle 94.

Die Fig. 6 zeigt eine Schnittdarstellung entlang der Linie I-I von Fig. 5. Dabei ist zu erkennen, daß das Festrad 98 auf der Antriebswelle 84 mit dem Festrad 124 auf der Zwischenwelle 92 in Eingriff steht. Das Losrad 100 der Abtriebswelle 94 steht mit dem Losrad 106 der Zwischenwelle 88 und mit dem Losrad 116 der Zwischenwelle 90 in Eingriff. Antriebswelle 84 und Zwischenwelle 88 sind parallel zueinander im Abstand Al angeordnet. Antriebswelle 84 und Zwischenwelle 90 sind parallel zueinander im Abstand A2 angeordnet. Zwischenwelle 88 und Abtriebswelle 94 sind parallel zueinander im Abstand A3 angeordnet. Abtriebswelle 94 und Zwischenwelle 90 sind parallel zueinander im Abstand A4 angeordnet. Die Abstände A1 bis A4 aus Fig. 6 sind auch in Fig. 5 angegeben.

Getriebeanordnungen mit sechzehn Gangstufen werden vorwiegend in einer Standardanordnung im Fahrzeug mit Heckantrieb vorgesehen sein, d. h. das Getriebe ist längs im Fahrzeug in Fahrtrichtung angeordnet.

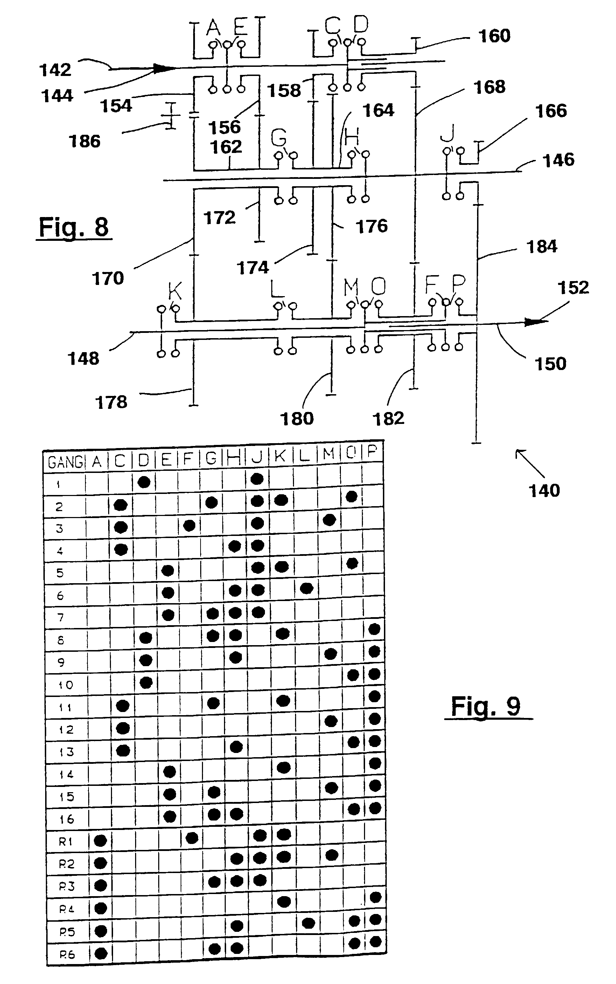

Die Fig. 8 zeigt eine weitere Ausgestaltung eines erfindungsgemäßen Getriebeschemas für ein 16-Gang-Getriebe. Dabei weist das Getriebe 140 eine Antriebswelle 142 auf, der von einer hier nicht gezeigten Antriebsquelle, wie einer Brennkraftmaschine, über eine hier ebenfalls nicht dargestellte Kupplung Antriebsenergie zugeführt wird, wie durch den Pfeil 144 angedeutet. Die Antriebswelle 142 kann zweiteilig ausgeführt sein, wobei der eine Wellenteil im anderen Wellenteil gelagert ist.
Parallel zur Antriebswelle 142 sind eine erste Zwischenwelle 146 und eine zweite Zwischenwelle 148, sowie eine Abtriebswelle 150 angeordnet. Dabei ist die Abtriebswelle 150 in der axialen Verlängerung der Zwischenwelle 148 vorgesehen, wobei die Abtriebswelle 150 auf einer Seite, vorzugsweise innerhalb der Zwischenwelle 148, gelagert ist. Durch den Pfeil 152 wird die den Rädern zugeführte Abtriebsenergie angedeutet. Auf der Antriebswelle 142 sind vier Losräder 154, 156, 158 und 160 angeordnet, die einzeln der Antriebswelle 142 über Schaltelemente A, E, C oder D zugeschaltet werden können. Dabei ist das Losrad 154 über das Schaltelement A, das Losrad 156 über das Schaltelement E, das Losrad 158 über das Schaltelement C und das Losrad 160 über das Schaltelement D mit der Antriebswelle 142 verbindbar.

Auf der Zwischenwelle 146 sind drei Losräder 162, 164 und 166 vorgesehen. Dabei trägt das Losrad 162 zwei Zahnräder 170 und 172 und das Losrad 164 trägt zwei Zahnräder 174 und 176. Ebenfalls ist auf der Zwischenwelle 146 ein Festrad 168 angeordnet.
Das Losrad 164 ist über ein Schaltelement H mit der Zwischenwelle 146 verbindbar. Das Losrad 162 ist mit dem Losrad 164 über ein Schaltelement G verbindbar. Das Losrad 166 ist mit der Zwischenwelle 146 über ein Schaltelement J verbindbar.

Auf der Zwischenwelle 148 sind drei Losräder 178, 180 und 182 vorgesehen. Das Losrad 178 ist über ein Schaltelement K mit der Zwischenwelle 148 verbindbar. Das Losrad 180 ist mit der Zwischenwelle 148 über ein Schaltelement M verbindbar. Das Losrad 182 ist mit der Zwischenwelle 148 sowohl über ein Schaltelement O, als auch über ein Schaltelement F verbindbar, wobei beide Schaltelemente alternativ betätigt werden. Das Losrad 178 ist mit dem Losrad 180 über ein Schaltelement L verbindbar.

Auf der Abtriebswelle 150 ist eine Festrad 184 angeordnet. Das Festrad 184 ist über das Schaltelement P mit der Zwischenwelle 148 verbindbar. Ein Rückwärtsgangzahnrad 186 ist separat im Bereich von Losrad 154 der Antriebswelle 142 und Zahnrad 170 am Losrad 162 der Zwischenwelle 146 angeordnet. Dabei steht das Rückwärtsgangrad 186 mit dem Losrad 154 und dem Zahnrad 170 über entsprechende Verzahnungen in Eingriff. Ebenfalls steht das Zahnrad 170 am Losrad 162 mit dem Losrad 178 an der Zwischenwelle 148 über entsprechende Verzahnungen in Eingriff. Das Losrad 156 der Antriebswelle 142 steht mit dem Zahnrad 172 am Losrad 162 der Zwischenwelle 146 über entsprechende Verzahnungen in Eingriff. Ebenfalls steht das Losrad 158 der Antriebswelle 142 mit dem Zahnrad 174 am Losrad 164 der Zwischenwelle 146 über entsprechende Verzahnungen in Eingriff. Das Festrad 168 der Zwischenwelle 146 steht mit dem Losrad 160 der Antriebswelle 142 und mit dem Losrad 182 der Zwischenwelle 148 über entsprechende Verzahnungen in Eingriff. Ebenfalls steht das Zahnrad 176 am Losrad 164 der Zwischen- welle 146 mit dem Losrad 180 der Zwischenwelle 148 über entsprechende Verzahnungen in Eingriff.
Schließlich steht noch das Festrad 184 der Abtriebswelle 150 mit dem Losrad 166 der Zwischenwelle 146 über entsprechende Verzahnungen in Eingriff.

Dabei zeigt die Fig. 8 eine abgewickelte Darstellung des Getriebeschemas, bei der die Zahneingriffe nicht sämtlich darstellbar sind, weil die Wellen 142, 146, 148, 150 und die Lagerung für das Rückwärtsgangzahnrad 186 nicht in einer Ebene liegen.

Aufgrund der vorstehend geschilderten Anordnung der Zahnräder ergeben sich folgende Kraftflüsse in den einzelnen Gängen, wie sie in der Schaltelemententabelle in der Fig. 9 gezeigt sind:

Im ersten Gang sind die Schaltelemente D und J aktiviert. Dazu wird von einer hier nicht gezeigten Steuereinrichtung ein Signal an eine nicht dargestellte Aktivierungssvorrichtung abgegeben, die in bekannter Weise die Schaltelemente in axialer Richtung parallel zu den Wellen betätigt. Der Kraftfluß verläuft beim ersten Gang vom nicht gezeigten Antriebsmotor über eine ebenfalls nicht gezeigte Kupplungsvorrichtung auf die Eingangswelle 142, von dort über das Schaltelement D auf das Losrad 160, von dort auf das Festrad 168 und über das Schaltelement J auf das Losrad 166 und über das Festrad 184 auf die Abtriebswelle 150, die mit hier nicht angeführten weiteren Komponenten des Antriebsstrangs verbunden ist.

Der Kraftfluß verläuft beim zweiten Gang vom nicht gezeigten Antriebsmotor über die ebenfalls nicht gezeigte Kupplungsvorrichtung auf die Eingangswelle 142, von dort über das Schaltelement C auf das Losrad 158, von dort auf das Zahnrad 174 am Losrad 164 und über das Schaltelement G auf das Losrad 162, von dort über das Zahnrad 170 auf das Losrad 178 und über das Schaltelement K auf die Zwischenwelle 148, dann über das Schaltelement O und das Losrad 182 auf das Festrad 168 der Zwischenwelle 146 und über das Schaltelement J auf das Losrad 166 und über das Festrad 184 auf die Abtriebswelle 150.

Der Kraftfluß verläuft beim dritten Gang vom nicht gezeigten Antriebsmotor über die ebenfalls nicht gezeigte Kupplungsvorrichtung auf die Eingangswelle 142, von dort über das Schaltelement C auf das Losrad 158, von dort über die Zahnräder 174 und 176 am Losrad 164 auf das Losrad 180 und über das Schaltelement M auf die Zwischenwelle 148, von dort über das Schaltelement F auf das Losrad 182, von dort über das Festrad 168 und das Schaltelement J auf das Losrad 166 und über das Festrad 184 auf die Abtriebswelle 150.

Im vierten Gang verläuft der Kraftfluß vom nicht gezeigten Antriebsmotor über die ebenfalls nicht gezeigte Kupplungsvorrichtung auf die Eingangswelle 142, von dort über das Schaltelement C auf das Losrad 158, von dort auf das Zahnrad 174 am Losrad 164 und über das Schaltelement H auf die Zwischenwelle 146, von dort über das Schaltelement J auf das Losrad 166 und über das Festrad 184 auf die Abtriebswelle 150.

Im fünften Gang verläuft der Kraftfluß vom nicht gezeigten Antriebsmotor über die ebenfalls nicht gezeigte Kupplungsvorrichtung auf die Eingangswelle 142, von dort über das Schaltelement E auf das Losrad 156, von dort über die Zahnräder 172 und 170 am Losrad 162 auf das Losrad 178 und über das Schaltelement K auf die Zwischenwelle 148, von dort über das Schaltelement O und das Losrad 182 auf das Festrad 168 der Zwischenwelle 146 und über das Schaltelement J auf das Losrad 166 und über das Festrad 184 auf die Abtriebswelle 150.

Der Kraftfluß verläuft beim sechsten Gang vom nicht gezeigten Antriebsmotor über die ebenfalls nicht gezeigte Kupplungsvorrichtung auf die Eingangswelle 142, von dort über das Schaltelement E auf das Losrad 156, von dort über die Zahnräder 172 und 170 am Losrad 162 auf das Losrad 178 und über das Schaltelement L auf das Losrad 180, von dort über das Zahnrad 176 am Losrad 164 und das Schaltelement H auf die Zwischenwelle 146, von dort über das Schaltelement J, das Losrad 166 und das Festrad 184 auf die Abtriebswelle 150.

Im siebten Gang verläuft der Kraftfluß vom nicht gezeigten Antriebsmotor über die ebenfalls nicht gezeigte Kupplungsvorrichtung auf die Eingangswelle 142, von dort über das Schaltelement E auf das Losrad 156, von dort auf das Zahnrad 172 am Losrad 162 und über das Schaltelement G auf das Losrad 164, von dort über das Schaltelement H auf die Zwischenwelle 146, dann über das Schaltelement J und das Losrad 166 und das Festrad 184 auf die Abtriebswelle 150.

Im achten Vorwärtsgang verläuft der Kraftfluß vom nicht gezeigten Antriebsmotor über die ebenfalls nicht gezeigte Kupplungsvorrichtung auf die Eingangswelle 142, von dort über das Schaltelement D auf das Losrad 160, von dort auf das Festrad 168 an der Zwischenwelle 146 und über das Schaltelement H auf das Losrad 164 und über das Schaltelement G auf das Losrad 162, von dort über das Zahnrad 170 auf das Losrad 178 und über das Schaltelement K auf die Zwischenwelle 148 und dann über das Schaltelement P auf die Abtriebswelle 150.

Im neunten Gang verläuft der Kraftfluß vom nicht gezeigten Antriebsmotor über die ebenfalls nicht gezeigte Kupplungsvorrichtung auf die Eingangswelle 142, von dort über das Schaltelement D auf das Losrad 160, von dort auf das Festrad 168 an der Zwischenwelle 146 und über das Schaltelement H auf das Losrad 164, von dort über das Zahnrad 176 auf das Losrad 180 und über das Schaltelement M auf die Zwischenwelle 148, dann über das Schaltelement P auf die Abtriebswelle 150.

Im zehnten Vorwärtsgang verläuft der Kraftfluß vom nicht gezeigten Antriebsmotor über die ebenfalls nicht gezeigte Kupplungsvorrichtung auf die Eingangswelle 142, von dort über das Schaltelement D auf das Losrad 160, von dort über das Festrad 168 auf das Losrad 182 und über das Schaltelement O auf die Zwischenwelle 148, von dort über das Schaltelement P auf die Abtriebswelle 150.

Der Kraftfluß verläuft beim elften Gang vom nicht gezeigten Antriebsmotor über eine ebenfalls nicht gezeigte Kupplungsvorrichtung auf die Eingangswelle 142, von dort über das Schaltelement C auf das Losrad 158, von dort auf das Zahnrad 174 am Losrad 164 und über das Schaltelement G auf das Losrad 162 und über das Zahnrad 170 auf das Losrad 178, von dort über das Schaltelement K auf die Zwischenwelle 148 und über das Schaltelement P auf die Abtriebswelle 150.

Der Kraftfluß verläuft beim zwölften Gang vom nicht gezeigten Antriebsmotor über die ebenfalls nicht gezeigte Kupplungsvorrichtung auf die Eingangswelle 142, von dort über das Schaltelement C auf das Losrad 158, von dort über die Zahnräder 174 und 176 am Losrad 164 auf das Losrad 180 und über das Schaltelement M auf die Zwischenwelle 148, von dort über das Schaltelement P auf die Abtriebswelle 150.

Im dreizehnten Gang verläuft der Kraftfluß vom nicht gezeigten Antriebsmotor über die ebenfalls nicht gezeigte Kupplungsvorrichtung auf die Eingangswelle 142, von dort über das Schaltelement C auf das Losrad 158, von dort auf das Zahnrad 174 am Losrad 164 und über das Schaltelement H auf die Zwischenwelle 146, dann über das Festrad 168 auf das Losrad 182 und über das Schaltelement O auf die Zwischenwelle 148, von dort über das Schaltelement P auf die Abtriebswelle 150.

Im vierzehnten Gang verläuft der Kraftfluß vom nicht gezeigten Antriebsmotor über die ebenfalls nicht gezeigte Kupplungsvorrichtung auf die Eingangswelle 142, von dort über das Schaltelement E auf das Losrad 156, von dort auf die Zahnräder 172 und 170 am Losrad 162, über das Losrad 178 und über das Schaltelement K auf die Zwischenwelle 148, dann über das Schaltelement P auf die Abtriebswelle 150.

Der Kraftfluß verläuft beim fünfzehnten Gang vom nicht gezeigten Antriebsmotor über eine ebenfalls nicht gezeigte Kupplungsvorrichtung auf die Eingangswelle 142, von dort über das Schaltelement E auf das Losrad 156, von dort auf das Zahnrad 172 am Losrad 162 und über das Schaltelement G auf das Losrad 164, über das Zahnrad 176 am Losrad 164 auf das Losrad 180 und über das Schaltelement M auf die Zwischenwelle 148, dann über das Schaltelement P auf die Abtriebswelle 150.

Der Kraftfluß verläuft beim sechzehnten Gang vom nicht gezeigten Antriebsmotor über die ebenfalls nicht gezeigte Kupplungsvorrichtung auf die Eingangswelle 142, von dort über das Schaltelement E auf das Losrad 156, von dort auf das Zahnrad 172 am Losrad 162 und über das Schaltelement G auf das Losrad 164, von dort über das Schaltelement H auf die Zwischenwelle 146 und auf das Festrad 168, von dort auf das Losrad 182 und über das Schaltelement O auf die Zwischenwelle 148, dann über das Schaltelement P auf die Abtriebswelle 150.

Zu diesen beschriebenen sechzehn Vorwärtsgänge kommen sechs mögliche Rückwärtsgänge hinzu, so daß eine Gesamtzahl von zweiundzwanzig Gangstufen bei Verwendung von nur fünfzehn Zahnrädern erzielt wird. Dazu sind dreizehn Schaltelemente erforderlich, die sich aus vier Doppelschaltelementen und fünf Einzelschaltelementen kombinieren lassen.

Der Kraftfluß verläuft beim ersten Rückwärtsgang vom nicht gezeigten Antriebsmotor über die ebenfalls nicht gezeigte Kupplungsvorrichtung auf die Eingangswelle 142, von dort über das Schaltelement A auf das Losrad 154 und über das Rückwärtsgangrad 186 auf das Zahnrad 170 am Losrad 162, von dort auf das Losrad 178 und über das Schaltelement K auf die Zwischenwelle 148, von dort über das Schaltelement F auf das Losrad 182, von dort über das Festrad 168 an der Zwischenwelle 146 und über das Schaltelement J auf das Losrad 166 und über das Festrad 184 auf die Abtriebswelle 150.

Der Kraftfluß verläuft beim zweiten Rückwärtsgang vom nicht gezeigten Antriebsmotor über die ebenfalls nicht gezeigte Kupplungsvorrichtung auf die Eingangswelle 142, von dort über das Schaltelement A auf das Losrad 154 und über das Rückwärtsgangrad 186 auf das Zahnrad 170 am Losrad 162, von dort auf das Losrad 178 und über das Schaltelement K auf die Zwischenwelle 148, von dort über das Schaltelement M auf das Losrad 180, von dort über das Zahnrad 176 am Losrad 164 und über das Schaltelement H auf die Zwischenwelle 146 und über das Schaltelement J auf das Losrad 166 und über das Festrad 184 auf die Abtriebswelle 150.

Der Kraftfluß verläuft beim dritten Rückwärtsgang vom nicht gezeigten Antriebsmotor über die ebenfalls nicht gezeigte Kupplungsvorrichtung auf die Eingangswelle 142, von dort über das Schaltelement A auf das Losrad 154 und über das Rückwärtsgangrad 186 auf das Zahnrad 170 am Losrad 162, von dort über das Schaltelement G auf das Losrad 164, von dort über das Schaltelement H auf die Zwischenwelle 146 und über das Schaltelement J auf das Losrad 166 und über das Festrad 184 auf die Abtriebswelle 150.

Der Kraftfluß verläuft beim vierten Rückwärtsgang vom nicht gezeigten Antriebsmotor über die ebenfalls nicht gezeigte Kupplungsvorrichtung auf die Eingangswelle 142, von dort über das Schaltelement A auf das Losrad 154 und über das Rückwärtsgangrad 186 auf das Zahnrad 170 am Losrad 162, von dort auf das Losrad 178 und über das Schaltelement K auf die Zwischenwelle 148, von dort über das Schaltelement P auf die Abtriebswelle 150.

Der Kraftfluß verläuft beim fünften Rückwärtsgang vom nicht gezeigten Antriebsmotor über die ebenfalls nicht gezeigte Kupplungsvorrichtung auf die Eingangswelle 142, von dort über das Schaltelement A auf das Losrad 154 und über das Rückwärtsgangrad 186 auf das Zahnrad 170 am Losrad 162, von dort auf das Losrad 178 und über das Schaltelement L auf das Losrad 180, von dort auf das Zahnrad 176 am Losrad 164 und über das Schaltelement H auf die Zwischenwelle 146, über das Festrad 168 an der Zwischenwelle 146 auf das Losrad 182 und über das Schaltelement O auf die Zwischenwelle 148, von dort über das Schaltelement P auf die Abtriebswelle 150.

Der Kraftfluß verläuft schließlich beim sechsten Rückwärtsgang vom nicht gezeigten Antriebsmotor über die ebenfalls nicht gezeigte Kupplungsvorrichtung auf die Eingangswelle 142, von dort über das Schaltelement A auf das Losrad 154 und über das Rückwärtsgangrad 186 auf das Zahnrad 170 am Losrad 162, von dort über das Schaltelement G auf das Losrad 164 und über das Schaltelement H auf die Zwischenwelle 146, von dort über das Festrad 168 an der Zwischenwelle 146, das Losrad 182 und über das Schaltelement O auf die Zwischenwelle 148, von dort über das Schaltelement P auf die Abtriebswelle 150.

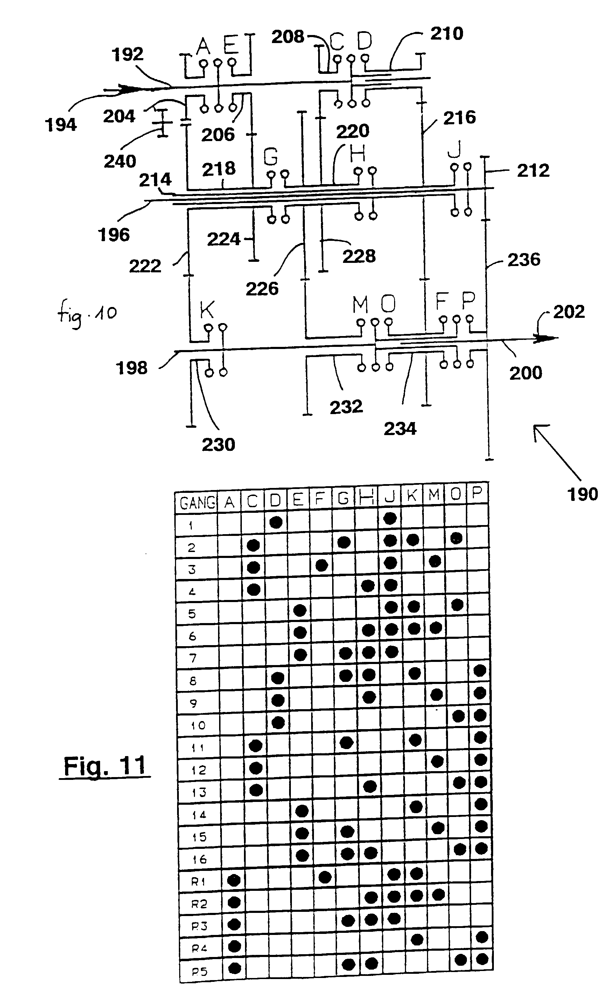

Die Fig. 10 zeigt eine weitere Ausgestaltung eines erfindungsgemäßen Getriebeschemas für ein 16-Gang-Getriebe.

Dabei weist das Getriebe 190 eine Antriebswelle 192 auf, der von einer hier nicht gezeigten Antriebsquelle, wie einer Brennkraftmaschine, über eine hier ebenfalls nicht dargestellte Kupplung Antriebsenergie zugeführt wird, wie durch den Pfeil 194 angedeutet. Die Antriebswelle 192 kann zweiteilig ausgeführt sein, wobei der eine Wellenteil im anderen Wellenteil gelagert ist.
Parallel zur Antriebswelle 192 sind eine erste Zwischenwelle 196 und eine zweite Zwischenwelle 198, sowie eine Abtriebswelle 200 angeordnet. Dabei ist die Abtriebswelle 200 in der axialen Verlängerung der Zwischenwelle 198 vorgesehen, wobei die Abtriebswelle 200 wenigstens auf einer Seite, vorzugsweise innerhalb der Zwischenwelle 198, gelagert ist. Durch den Pfeil 202 wird die den Rädern zugeführte Abtriebsenergie angedeutet. Auf der Antriebswelle 192 sind vier Losräder 204, 206, 208 und 210 angeordnet, die einzeln der Antriebswelle 192 über Schaltelemente A, E, C oder D zugeschaltet werden können. Dabei ist das Losrad 204 über das Schaltelement A, das Losrad 206 über das Schaltelement E, das Losrad 208 über das Schaltelement C und das Losrad 210 über das Schaltelement D mit der Antriebswelle 192 verbindbar.

Auf der Zwischenwelle 196 ist ein Festrad 212. Ebenfalls trägt die Zwischenwelle 196 eine Hohlwelle 214, auf der wiederum ein Festrad 216 angeordnet ist. Auf der Hohlwelle 214 sind weiterhin zwei Losräder 218 und 220 angeordnet. Davon trägt Losrad 218 die Zahnräder 222 und 224, Losrad 220 trägt die Zahnräder 226 und 228.
Das Losrad 218 ist über ein Schaltelement G mit dem Losrad 220 verbindbar. Losrad 220 ist über ein Schaltelement H mit der Hohlwelle 214 verbindbar und die Hohlwelle 214 ist über ein Schaltelement J mit der Zwischenwelle 196 verbindbar.

Auf der Zwischenwelle 198 sind drei Losräder 230, 232 und 234 vorgesehen. Das Losrad 230 ist über ein Schaltelement K mit der Zwischenwelle 198 verbindbar. Das Losrad 232 ist mit der Zwischenwelle 198 über ein Schaltelement M verbindbar. Das Losrad 234 ist mit der Zwischenwelle 198 sowohl über ein Schaltelement O als auch über ein Schaltelement F verbindbar, wobei beide Schaltelemente alternativ betätigt werden.

Auf der Abtriebswelle 200 ist eine Festrad 236 angeordnet. Das Festrad 236 ist über ein Schaltelement P mit der Zwischenwelle 198 verbindbar. Ein Rückwärtsgangzahnrad 240 ist separat im Bereich von Losrad 204 der Antriebswelle 192 und Zahnrad 222 am Losrad 218 der Hohlwelle 214 angeordnet. Dabei steht das Rückwärtsgangrad 240 mit dem Losrad 204 und dem Zahnrad 222 über entsprechende Verzahnungen in Eingriff. Ebenfalls steht das Zahnrad 222 am Losrad 218 mit dem Losrad 230 an der Zwischenwelle 198 über entsprechende Verzahnungen in Eingriff. Das Losrad 206 der Antriebswelle 192 steht mit dem Zahnrad 224 am Losrad 218 der Hohlwelle 214 über entsprechende Verzahnungen in Eingriff. Ebenfalls steht das Losrad 208 der Antriebswelle 192 mit dem Zahnrad 228 am Losrad 220 der Hohlwelle 214 über entsprechende Verzahnungen in Eingriff. Das Festrad 216 der Hohlwelle 214 steht mit dem Losrad 210 der Antriebswelle 192 und mit dem Losrad 234 der Zwischenwelle 198 über entsprechende Verzahnungen in Eingriff. Ebenfalls steht das Zahnrad 226 am Losrad 220 der Hohlwelle 214 mit dem Losrad 232 der Zwischenwelle 198 über entsprechende Verzahnungen in Eingriff.
Schließlich steht noch das Festrad 236 der Abtriebswelle 200 mit dem Festrad 212 der Zwischenwelle 196 über entsprechende Verzahnungen in Eingriff.

Dabei zeigt die Fig. 10 eine abgewickelte Darstellung des Getriebeschemas, bei der die Zahneingriffe nicht sämtlich darstellbar sind, weil die Wellen 192, 196, 198, 200, 214 und die Lagerung für das Rückwärtsgangzahnrad 240 nicht in einer Ebene liegen.

Aufgrund der vorstehend geschilderten Anordnung der Zahnräder ergeben sich folgende Kraftflüsse in den einzelnen Gängen, wie sie in der Schaltelemententabelle in der Fig. 11 gezeigt sind:

Im ersten Gang sind die Schaltelemente D und J aktiviert. Dazu wird von einer hier nicht gezeigten Steuereinrichtung ein Signal an eine nicht dargestellte Aktivierungsvorrichtung abgegeben, die in bekannter Weise die Schaltelemente in axialer Richtung parallel zu den Wellen betätigt. Der Kraftfluß verläuft beim ersten Gang vom nicht gezeigten Antriebsmotor über eine ebenfalls nicht gezeigte Kupplungsvorrichtung auf die Eingangswelle 192, von dort über das Schaltelement D auf das Losrad 210, von dort auf das Festrad 216 und über das Schaltelement J auf das Festrad 212 und über das Festrad 236 auf die Abtriebswelle 200, die mit hier nicht angeführten weiteren Komponenten des Antriebsstrangs verbunden ist.

Der Kraftfluß verläuft beim zweiten Gang vom nicht gezeigten Antriebsmotor über die ebenfalls nicht gezeigte Kupplungsvorrichtung auf die Eingangswelle 192, von dort über das Schaltelement C auf das Losrad 208, von dort auf das Zahnrad 228 am Losrad 220 und über das Schaltelement G auf das Losrad 218, von dort über das Zahnrad 222 auf das Losrad 230 und über das Schaltelement K auf die Zwischenwelle 198, dann über das Schaltelement O und das Losrad 234 auf das Festrad 216 der Hohlwelle 214 und über das Schaltelement J auf das Festrad 212 und über das Festrad 236 auf die Abtriebswelle 200.

Der Kraftfluß verläuft beim dritten Gang vom nicht gezeigten Antriebsmotor über die ebenfalls nicht gezeigte Kupplungsvorrichtung auf die Eingangswelle 192, von dort über das Schaltelement C auf das Losrad 208, von dort über die Zahnräder 228 und 226 am Losrad 220 auf das Losrad 232 und über das Schaltelement M auf die Zwischenwelle 198, von dort über das Schaltelement F auf das Losrad 234, von dort über das Festrad 216 und das Schaltelement J auf das Festrad 212 und über das Festrad 236 auf die Abtriebswelle 220.

Im vierten Gang verläuft der Kraftfluß vom nicht gezeigten Antriebsmotor über die ebenfalls nicht gezeigte Kupplungsvorrichtung auf die Eingangswelle 192, von dort über das Schaltelement C auf das Losrad 208, von dort auf das Zahnrad 228 am Losrad 220 und über das Schaltelement H auf die Hohlwelle 214, von dort über das Schaltelement J auf das Festrad 212 und über das Festrad 236 auf die Abtriebswelle 200.

Im fünften Gang verläuft der Kraftfluß vom nicht gezeigten Antriebsmotor über die ebenfalls nicht gezeigte Kupplungsvorrichtung auf die Eingangswelle 192, von dort über das Schaltelement E auf das Losrad 206, von dort über die Zahnräder 224 und 222 am Losrad 218 auf das Losrad 230 und über das Schaltelement K auf die Zwischenwelle 198, von dort über das Schaltelement O und das Losrad 234 auf das Festrad 216 der Hohlwelle 214 und über das Schaltelement J auf das Festrad 212 und über das Festrad 236 auf die Abtriebswelle 200.

Der Kraftfluß verläuft beim sechsten Gang vom nicht gezeigten Antriebsmotor über die ebenfalls nicht gezeigte Kupplungsvorrichtung auf die Eingangswelle 192, von dort über das Schaltelement E auf das Losrad 206, von dort über die Zahnräder 224 und 222 am Losrad 218 auf das Losrad 230, von dort über das Schaltelement K auf die Zwischenwelle 198 und über das Schaltelement M auf das Losrad 232, von dort über das Zahnrad 226 am Losrad 220 und das Schaltelement H auf die Hohlwelle 214, von dort über das Schaltelement J, das Festrad 212 und das Festrad 236 auf die Abtriebswelle 200.

Im siebten Gang verläuft der Kraftfluß vom nicht gezeigten Antriebsmotor über die ebenfalls nicht gezeigte Kupplungsvorrichtung auf die Eingangswelle 192, von dort über das Schaltelement E auf das Losrad 206, von dort auf das Zahnrad 224 am Losrad 218 und über das Schaltelement G auf das Losrad 220, von dort über das Schaltelement H auf die Hohlwelle 214, dann über das Schaltelement J und das Festrad 212 und das Festrad 236 auf die Abtriebswelle 200.

Im achten Vorwärtsgang verläuft der Kraftfluß vom nicht gezeigten Antriebsmotor über die ebenfalls nicht gezeigte Kupplungsvorrichtung auf die Eingangswelle 192, von dort über das Schaltelement D auf das Losrad 210, von dort auf das Festrad 216 an der Hohlwelle 214 und über das Schaltelement H auf das Losrad 220 und über das Schaltelement G auf das Losrad 218, von dort über das Zahnrad 222 auf das Losrad 230 und über das Schaltelement K auf die Zwischenwelle 198 und dann über das Schaltelement P auf die Abtriebswelle 200.

Im neunten Gang verläuft der Kraftfluß vom nicht gezeigten Antriebsmotor über die ebenfalls nicht gezeigte Kupplungsvorrichtung auf die Eingangswelle 192, von dort über das Schaltelement D auf das Losrad 210, von dort auf das Festrad 216 an der Hohlwelle 214 und über das Schaltelement H auf das Losrad 220, von dort über das Zahnrad 226 auf das Losrad 232 und über das Schaltelement M auf die Zwischenwelle 198, dann über das Schaltelement P auf die Abtriebswelle 200.

Im zehnten Vorwärtsgang verläuft der Kraftfluß vom nicht gezeigten Antriebsmotor über die ebenfalls nicht gezeigte Kupplungsvorrichtung auf die Eingangswelle 192, von dort über das Schaltelement D auf das Losrad 210, von dort über das Festrad 216 auf das Losrad 234 und über das Schaltelement O auf die Zwischenwelle 198, von dort über das Schaltelement P auf die Abtriebswelle 200.

Der Kraftfluß verläuft beim elften Gang vom nicht gezeigten Antriebsmotor über eine ebenfalls nicht gezeigte Kupplungsvorrichtung auf die Eingangswelle 192, von dort über das Schaltelement C auf das Losrad 208, von dort auf das Zahnrad 228 am Losrad 220 und über das Schaltelement G auf das Losrad 218 und über das Zahnrad 222 auf das Losrad 230, von dort über das Schaltelement K auf die Zwischenwelle 198 und über das Schaltelement P auf die Abtriebswelle 200.

Der Kraftfluß verläuft beim zwölften Gang vom nicht gezeigten Antriebsmotor über die ebenfalls nicht gezeigte Kupplungsvorrichtung auf die Eingangswelle 192, von dort über das Schaltelement C auf das Losrad 208, von dort über die Zahnräder 228 und 226 am Losrad 220 auf das Losrad 232 und über das Schaltelement M auf die Zwischenwelle 198, von dort über das Schaltelement P auf die Abtriebswelle 200.

Im dreizehnten Gang verläuft der Kraftfluß vom nicht gezeigten Antriebsmotor über die ebenfalls nicht gezeigte Kupplungsvorrichtung auf die Eingangswelle 192, von dort über das Schaltelement C auf das Losrad 208, von dort auf das Zahnrad 228 am Losrad 220 und über das Schaltelement H auf die Hohlwelle 214, dann über das Festrad 216 auf das Losrad 234 und über das Schaltelement O auf die Zwischenwelle 198, von dort über das Schaltelement P auf die Abtriebswelle 200.

Im vierzehnten Gang verläuft der Kraftfluß vom nicht gezeigten Antriebsmotor über die ebenfalls nicht gezeigte Kupplungsvorrichtung auf die Eingangswelle 192, von dort über das Schaltelement E auf das Losrad 206, von dort auf die Zahnräder 224 und 222 am Losrad 218, über das Losrad 230 und über das Schaltelement K auf die Zwischenwelle 198, dann über das Schaltelement P auf die Abtriebswelle 200.

Der Kraftfluß verläuft beim fünfzehnten Gang vom nicht gezeigten Antriebsmotor über eine ebenfalls nicht gezeigte Kupplungsvorrichtung auf die Eingangswelle 192, von dort über das Schaltelement E auf das Losrad 206, von dort auf das Zahnrad 224 am Losrad 218 und über das Schaltelement G auf das Losrad 220, über das Zahnrad 226 am Losrad 220 auf das Losrad 232 und über das Schaltelement M auf die Zwischenwelle 198, dann über das Schaltelement P auf die Abtriebswelle 200.

Der Kraftfluß verläuft beim sechzehnten Gang vom nicht gezeigten Antriebsmotor über die ebenfalls nicht gezeigte Kupplungsvorrichtung auf die Eingangswelle 192, von dort über das Schaltelement E auf das Losrad 206, von dort auf das Zahnrad 224 am Losrad 118 und über das Schaltelement G auf das Losrad 220, von dort über das Schaltelement H auf das Festrad 216 an der Hohlwelle 214, von dort auf das Losrad 234 und über das Schaltelement O auf die Zwischenwelle 198, dann über das Schaltelement P auf die Abtriebswelle 200.

Zu diesen beschriebenen sechzehn Vorwärtsgänge kommen fünf mögliche Rückwärtsgänge hinzu, so daß eine Gesamtzahl von einundzwanzig Gangstufen bei Verwendung von nur fünfzehn Zahnrädern erzielt wird. Dazu sind nur zwölf Schaltelemente erforderlich, die sich aus vier Doppelschaltelementen und vier Einzelschaltelementen kombinieren lassen.

Der Kraftfluß verläuft beim ersten Rückwärtsgang vom nicht gezeigten Antriebsmotor über die ebenfalls nicht gezeigte Kupplungsvorrichtung auf die Eingangswelle 192, von dort über das Schaltelement A auf das Losrad 204 und über das Rückwärtsgangrad 240 auf das Zahnrad 222 am Losrad 218, von dort auf das Losrad 230 und über das Schaltelement K auf die Zwischenwelle 198, von dort über das Schaltelement F auf das Losrad 234, von dort über das Festrad 216 an der Hohlwelle 214 und über das Schaltelement J auf das Festrad 212 und über das Festrad 236 auf die Abtriebswelle 200.

Der Kraftfluß verläuft beim zweiten Rückwärtsgang vom nicht gezeigten Antriebsmotor über die ebenfalls nicht gezeigte Kupplungsvorrichtung auf die Eingangswelle 192, von dort über das Schaltelement A auf das Losrad 204 und über das Rückwärtsgangrad 240 auf das Zahnrad 222 am Losrad 218, von dort auf das Losrad 230 und über das Schaltelement K auf die Zwischenwelle 198, von dort über das Schaltelement M auf das Losrad 232, von dort über das Zahnrad 226 am Losrad 220, über das Schaltelement H auf die Hohlwelle 214 und über das Schaltelement J auf das Festrad 212 und über das Festrad 236 auf die Abtriebswelle 200.

Der Kraftfluß verläuft beim dritten Rückwärtsgang vom nicht gezeigten Antriebsmotor über die ebenfalls nicht gezeigte Kupplungsvorrichtung auf die Eingangswelle 192, von dort über das Schaltelement A auf das Losrad 204 und über das Rückwärtsgangrad 240 auf das Zahnrad 222 am Losrad 218, von dort über das Schaltelement G auf das Losrad 220, von dort über das Schaltelement H auf die Hohlwelle 214 und über das Schaltelement J auf das Festrad 212 und über das Festrad 236 auf die Abtriebswelle 200.

Der Kraftfluß verläuft beim vierten Rückwärtsgang vom nicht gezeigten Antriebsmotor über die ebenfalls nicht gezeigte Kupplungsvorrichtung auf die Eingangswelle 192, von dort über das Schaltelement A auf das Losrad 204 und über das Rückwärtsgangrad 240 auf das Zahnrad 222 am Losrad 218, von dort auf das Losrad 230 und über das Schaltelement K auf die Zwischenwelle 198, von dort über das Schaltelement P auf die Abtriebswelle 200.

Der Kraftfluß verläuft schließlich beim fünften Rückwärtsgang vom nicht gezeigten Antriebsmotor über die ebenfalls nicht gezeigte Kupplungsvorrichtung auf die Eingangswelle 192, von dort über das Schaltelement A auf das Losrad 204 und über das Rückwärtsgangrad 240 auf das Zahnrad 222 am Losrad 218, von dort über das Schaltelement G auf das Losrad 220 und über das Schaltelement H auf die Hohlwelle 214, von dort über das Festrad 216 an der Hohllwelle 214, das Losrad 234 und über das Schaltelement O auf die Zwischenwelle 198, von dort über das Schaltelement P auf die Abtriebswelle 200.

Vorliegendes Konzept ermöglicht die Bildung von Getrieben mit verringerter Bauteileanzahl bei gesteigerter Gangstufenzahl. Bei verschiedenen Gangstufen können dabei gleiche Zahnräder eingebunden werden.

### Bezugszeichen

- 2: Getriebe
- 4: Antriebswelle
- 6: Pfeil
- 8: Zwischenwelle
- 10: Abtriebswelle
- 12: Pfeil
- 13: Abtriebswelle
- 14: Losrad
- 16: Losrad
- 18: Losrad
- 20: Festrad
- 21: Zahnrad
- 22: Zahnrad am Losrad 26
- 23: Differential
- 24: Zahnrad am Losrad 26
- 26: Losrad
- 28: Losrad
- 30: Festrad
- 32: Losrad
- 34: Losrad
- 36: Schiebemuffe
- 38: Schiebemuffe
- 40: Getriebe
- 42: Antriebswelle
- 44: Pfeil
- 46: Zwischenwelle
- 48: Zwischenwelle
- 50: Zwischenwelle
- 52: Losrad
- 53: Abtriebswelle
- 54: Abtriebswelle
- 55: Pfeil
- 56: Pfeil
- 57: Differential
- 58: Losrad
- 59: Zahnrad
- 60: Losrad
- 62: Zahnrad am Losrad 60
- 64: Zahnrad am Losrad 60
- 66: Festrad
- 68: Losrad
- 70: Losrad
- 72: Festrad
- 74: Losrad
- 76: Losrad
- 78: Festrad
- 80: Festrad
- 82: Getriebe
- 84: Antriebswelle
- 86: Pfeil
- 88: Zwischenwelle
- 90: Zwischenwelle
- 92: Zwischenwelle
- 94: Abtriebswelle
- 96: Pfeil
- 98: Festrad
- 100: Losrad
- 102: Losrad
- 104: Losrad
- 106: Losrad
- 108: Losrad
- 110: Losrad
- 112: Losrad
- 114: Trennstelle
- 116: Losrad
- 118: Losrad
- 120: Losrad
- 122: Losrad
- 124: Festrad
- 126: Losrad
- 128: Losrad
- 130: Zahnrad am Losrad 128
- 132: Zahnrad am Losrad 128
- 140: Getriebe
- 142: Antriebswelle
- 144: Pfeil
- 146: Zwischenwelle
- 148: Zwischenwelle
- 150: Abtriebswelle
- 152: Pfeil
- 156: Losrad
- 158: Losrad
- 160: Losrad
- 162: Losrad
- 164: Losrad
- 166: Losrad
- 168: Festrad
- 170: Zahnrad am Losrad 162
- 172: Zahnrad am Losrad 162
- 174: Zahnrad am Losrad 164
- 176: Zahnrad am Losrad 164
- 178: Losrad
- 180: Losrad
- 182: Losrad
- 184: Festrad
- 186: Rückwärtsgangrad
- 190: Getriebe
- 192: Antriebswelle
- 194: Pfeil
- 196: Zwischenwelle
- 198: Zwischenwelle
- 200: Abtriebswelle
- 202: Pfeil
- 204: Losrad
- 206: Losrad
- 208: Losrad
- 210: Losrad
- 212: Festrad
- 214: Hohlwelle
- 216: Festrad
- 218: Losrad
- 220: Losrad
- 222: Zahnrad am Losrad 218
- 224: Zahnrad am Losrad 218
- 226: Zahnrad am Losrad 220
- 228: Zahnrad am Losrad 220
- 230: Losrad
- 232: Losrad
- 234: Losrad
- 236: Festrad
- 240: Rückwärtsgangrad

## Patentansprüche

1. Mehrgängiges Stufenwechselgetriebe (2, 40, 82, 140, 190) mit einer Vielzahl von Vorwärtsgangstufen und wenigstens einer Rückwärtsgangstufe, das über eine Kupplungsvorrichtung, die beim Schaltvorgang eine Lastunterbrechung herstellt, mit einer Antriebseinrichtung, insbesondere einer Brennkraftmaschine, lösbar verbunden ist, mit einer mit der Kupplungsvorrichtung verbundenen Antriebswelle (4, 42, 84, 142, 192) und einer Abtriebswelle (13, 53, 54, 94, 150, 200) und wenigstens einer Zwischenwelle (8, 10, 46, 48, 50, 88, 90, 92, 146, 148, 196, 198), mit Festrädern (20, 30, 72, 78, 80, 124, 168, 184, 216, 236), die mit den genannten Wellen drehfest verbunden sind, und mit Losräder (14 - 18, 26, 28, 32, 34, 52, 58, 60, 68, 70, 74, 76, 100 - 112, 116 - 122, 126, 128, 156 - 166, 178 - 182, 204 - 210, 218, 220, 230 - 234), die auf den genannten Wellen drehbar gelagert sind, und mit Schaltelementen (A - R), durch die die genannten Losräder mit den genannten Wellen zur Drehmomentübertragung verbunden werden können, wobei die Schaltelemente (A - R) derart unabhängig voneinander einzeln schaltbar sind, daß zur Änderung einer Gangstufe mehrere Schaltelemente (A - R) gleichzeitig betätigbar sind, dadurch gekennzeichnet, daß das Zahlenverhältnis der Summe der vorgesehenen Losräder (14 - 18, 26, 28, 32, 34, 52, 58, 60, 68, 70, 74, 76, 100 - 112, 116 - 122, 126, 128, 156 - 166, 178 - 182, 204 - 210, 218, 220, 230 - 234) und Festräder (20, 30, 72, 78, 80, 124, 168, 184, 216, 236) zu der Anzahl der Gangstufen zwischen 1,1 und 0,66 beträgt.

2. Mehrgängiges Stufenwechselgetriebe (2, 40, 82, 140, 190) nach Anspruch 1, dadurch gekennzeichnet, daß das Zahlenverhältnis der Summe der vorgesehenen Losräder (14 - 18, 26, 28, 32, 34, 52, 58, 60, 68, 70, 74, 76, 100 - 112, 116 - 122, 126, 128, 156 - 166, 178 - 182, 204 - 210, 218, 220, 230 - 234) und Festräder (20, 30, 72, 78, 80, 124, 168, 184, 216, 236) zu der Anzahl der Gangstufen kleiner 0,73 beträgt.

3. Mehrgängiges Stufenwechselgetriebe (2, 40, 82, 140, 190) nach Anspruch 1 oder 2, dadurch gekennzeichnet, daß das Zahlenverhältnis der Summe der vorgesehenen Losräder (14 - 18, 26, 28, 32, 34, 52, 58, 60, 68, 70, 74, 76, 100 - 112, 116 - 122, 126, 128, 156 - 166, 178 - 182, 204 - 210, 218, 220, 230 - 234) und Festräder (20, 30, 72, 78, 80, 124, 168, 184, 216, 236) zu der Anzahl der Gangstufen kleiner 0,69 beträgt.

4. Mehrgängiges Stufenwechselgetriebe (2, 40, 82, 140, 190) nach wenigstens einem der Ansprüche 1 bis 3, dadurch gekennzeichnet, daß zur Unterstützung der Drehmomentübertragung und zur Verzweigung des Drehmomentenflusses zusätzliche Schaltelemente (G, L, N) betätigbar sind.

5. Mehrgängiges Stufenwechselgetriebe (2, 40, 82, 140, 190) nach wenigstens einem der Ansprüche 1 bis 4, dadurch gekennzeichnet, daß zur Schaltung der Rückwärtsgangstufen wenigstens teilweise die gleichen Schaltelemente (A - P) wie zur Schaltung der Vorwärtsgangstufen verwendet werden.

6. Mehrgängiges Stufenwechselgetriebe (2, 40, 82, 140, 190) nach wenigstens einem der Ansprüche 1 bis 5, dadurch gekennzeichnet, daß die Antriebswelle (4, 42, 84, 142, 192) horizontal unterhalb der Abtriebswelle (13, 53, 54, 94, 150, 200) angeordnet ist.

7. Mehrgängiges Stufenwechselgetriebe (2, 40, 82, 140, 190) nach wenigstens einem der Ansprüche 1 bis 6, dadurch gekennzeichnet, daß die Schaltelemente (A - R) Synchronisiereinrichtungen sind.

8. Mehrgängiges Stufenwechselgetriebe (2, 40, 82, 140, 190) nach wenigstens einem der Ansprüche 1 bis 6, dadurch gekennzeichnet, daß die Schaltelemente (A - R) Klauenkupplungen sind.

9. Mehrgängiges Stufenwechselgetriebe (2, 40, 82, 140, 190) nach wenigstens einem der Ansprüche 1 bis 6, dadurch gekennzeichnet, daß die Schaltelemente (A - R) hydraulische Kupplungen sind.

10. Mehrgängiges Stufenwechselgetriebe (2, 40, 82, 140, 190) nach wenigstens einem der Ansprüche 1 bis 6, dadurch gekennzeichnet, daß die Schaltelemente ( A - R) Lamellenkupplungen sind.

11. Mehrgängiges Stufenwechselgetriebe (2, 40, 82, 140, 190) nach Anspruch 1,
dadurch gekennzeichnet, daß das Getriebe (2, 40) acht Vorwärtsgangstufen und zwei Rückwärtsgangstufen aufweist.

12. Mehrgängiges Stufenwechselgetriebe (2, 40, 82, 140, 190) nach einem der Ansprüche 1 bis 3, dadurch gekennzeichnet, daß das Getriebe (82) sechzehn Vorwärtsgangstufen und acht Rückwärtsgangstufen aufweist.

13. Mehrgängiges Stufenwechselgetriebe (2, 40, 82, 140, 190) nach einem der Ansprüche 1 bis 3, dadurch gekennzeichnet, daß das Getriebe (140) sechzehn Vorwärtsgangstufen und sechs Rückwärtsgangstufen aufweist.

14. Mehrgängiges Stufenwechselgetriebe (2, 40, 82, 140, 190) nach einem der Ansprüche 1 oder 2, dadurch gekennzeichnet, daß das Getriebe (190) sechzehn Vorwärtsgangstufen und fünf Rückwärtsgangstufen aufweist.

## Claims

1. Multi-speed variable-speed transmission (2, 40, 82, 140, 190) having a plurality of forward gears and at least one reverse gear, which transmission is releasably connected by a clutch device, which during the shift operation produces a load interruption, to a drive device, in particular to an internal combustion engine, having a drive shaft (4, 42, 84, 142, 192) connected to the clutch device and an output shaft (13, 53, 54, 94, 150, 200) and at least one intermediate shaft (8, 10, 46, 48, 50, 88, 90, 92, 146, 148, 196, 198), having fixed wheels (20, 30, 72, 78, 80, 124, 168, 184, 216, 236) non-rotatably connected to said shafts, and having loose wheels (14 - 18, 26, 28, 32, 34, 52, 58, 60, 68, 70, 74, 76, 100 - 112, 116 - 122, 126, 128, 156 - 166, 178 - 182, 204 - 210, 218, 220, 230 - 234) rotatably mounted on said shafts, and having shift elements (A - R), by means of which said loose wheels may be connected to said shafts for torque transmission, the shift elements (A - R) being individually shiftable independently of one another in such a way that, for changing a gear, a plurality of shift elements (A - R) are operable simultaneously, characterized in that the numerical ratio of the sum of provided loose wheels (14 - 18, 26, 28, 32, 34, 52, 58, 60, 68, 70, 74, 76, 100 - 112, 116 - 122, 126, 128, 156 - 166, 178 - 182, 204 - 210, 218, 220, 230 - 234) and fixed wheels (20, 30, 72, 78, 80, 124, 168, 184, 216, 236) to the number of gears is between 1.1 and 0.66.

2. Multi-speed variable-speed transmission (2, 40, 82, 140, 190) according to claim 1, characterized in that the numerical ratio of the sum of provided loose wheels (14 - 18, 26, 28, 32, 34, 52, 58, 60, 68, 70, 74, 76, 100 - 112, 116 - 122, 126, 128, 156 - 166, 178 - 182, 204 - 210, 218, 220, 230 - 234) and fixed wheels (20, 30, 72, 78, 80, 124, 168, 184, 216, 236) to the number of gears is less than 0.73.

3. Multi-speed variable-speed transmission (2, 40, 82, 140, 190) according to claim 1 or 2, characterized in that the numerical ratio of the sum of provided loose wheels (14 - 18, 26, 28, 32, 34, 52, 58, 60, 68, 70, 74, 76, 100 - 112, 116 - 122, 126, 128, 156 - 166, 178 - 182, 204 - 210, 218, 220, 230 - 234) and fixed wheels (20, 30, 72, 78, 80, 124, 168, 184, 216, 236) to the number of gears is less than 0.69.

4. Multi-speed variable-speed transmission (2, 40, 82, 140, 190) according to at least one of claims 1 to 3, characterized in that, for assisting torque transmission and splitting the torque flux, additional shift elements (G, L, N) are operable.

5. Multi-speed variable-speed transmission (2, 40, 82, 140, 190) according to at least one of claims 1 to 4, characterized in that, for shifting the reverse gears, at least partially the same shift elements (A - P) are used as for shifting the forward gears.

6. Multi-speed variable-speed transmission (2, 40, 82, 140, 190) according to at least one of claims 1 to 5, characterized in that the drive shaft (4, 42, 84, 142, 192) is disposed horizontally below the output shaft (13, 53, 54, 94, 150, 200).

7. Multi-speed variable-speed transmission (2, 40, 82, 140, 190) according to at least one of claims 1 to 6, characterized in that the shift elements (A - R) are synchronizing devices.

8. Multi-speed variable-speed transmission (2, 40, 82, 140, 190) according to at least one of claims 1 to 6, characterized in that the shift elements (A - R) are jaw clutches.

9. Multi-speed variable-speed transmission (2, 40, 82, 140, 190) according to at least one of claims 1 to 6, characterized in that the shift elements (A - R) are hydraulic clutches.

10. Multi-speed variable-speed transmission (2, 40, 82, 140, 190) according to at least one of claims 1 to 6, characterized in that the shift elements (A - R) are multiple-disc clutches.

11. Multi-speed variable-speed transmission (2, 40, 82, 140, 190) according to claim 1, characterized in that the transmission (2, 40) has eight forward gears and two reverse gears.

12. Multi-speed variable-speed transmission (2, 40, 82, 140, 190) according to one of claims 1 to 3, characterized in that the transmission (82) has sixteen forward gears and eight reverse gears.

13. Multi-speed variable-speed transmission (2, 40, 82, 140, 190) according to one of claims 1 to 3, characterized in that the transmission (140) has sixteen forward gears and six reverse gears.

14. Multi-speed variable-speed transmission (2, 40, 82, 140, 190) according to one of claims 1 or 2, characterized in that the transmission (190) has sixteen forward gears and five reverse gears.

## Revendications

1. Boîte de vitesses à changement de rapport par paliers et à plusieurs vitesses (2, 40, 82, 140, 190) comportant une multitude de paliers de vitesse en marche avant et au moins un palier de vitesse en marche arrière, accouplée de manière mobile par l'intermédiaire d'un dispositif d'accouplement produisant une interruption de charge lors du changement de vitesse, avec un dispositif d'entraînement, notamment un moteur à combustion interne, comportant un arbre menant (4, 42, 84, 142, 192) relié avec un dispositif d'accouplement, et un arbre mené (13, 53, 54, 94, 150, 200) et au moins un arbre intermédiaire (8, 10, 46, 48, 50, 88, 90, 92, 146, 148, 196, 198), avec des roues fixes (20, 30, 72, 78, 80, 124, 168, 184, 216, 236) reliées de manière fixe auxdits arbres, et comportant des roues mobiles (14 - 18, 26, 28, 32, 34, 52, 58, 60, 68, 70, 74, 76, 100 - 112, 116 - 122, 126, 128, 156 - 166, 178 - 182, 204 - 210, 218, 220, 230 - 234) qui sont montées de façon rotative sur lesdits arbres, et comportant des éléments de commande (A - R) par lesquels lesdites roues mobiles peuvent être accouplées avec les arbres pour la transmission du couple, les éléments de commande (A - R) étant embrayables individuellement de manière indépendante l'un de l'autre de façon que, pour le changement d'un rapport, plusieurs éléments de commande (A - R) peuvent être actionnés simultanément,
caractérisée en ce que le rapport numérique de la somme des roues mobiles (14 - 18, 26, 28, 32, 34, 52, 58, 60, 68, 70, 74, 76, 100 - 112, 116 - 122, 126, 128, 156 - 166, 178 - 182, 204 - 210, 218, 220, 230 -234) et des roues fixes (20, 30, 72, 78, 80, 124, 168, 184, 216, 236) prévues par rapport au nombre des paliers de vitesses se situe entre 1,1 et 0,66.

2. Boîte de vitesses à changement de rapport par paliers et à plusieurs vitesses (2, 40, 82, 140, 190) selon la revendication 1, caractérisée en ce que le rapport numérique de la somme des roues mobiles (14 - 18, 26, 28, 32, 34, 52, 58, 60, 68, 70, 74, 76, 100 - 112, 116 - 122, 126, 128, 156 - 166, 178 - 182, 204 - 210, 218, 220, 230 -234) et des roues fixes (20, 30, 72, 78, 80, 124, 168, 184, 216, 236) prévues par rapport au nombre des paliers de vitesses est inférieur à 0.73.

3. Boîte de vitesses à changement de rapport par paliers et à plusieurs vitesses (2, 40, 82, 140, 190) selon la revendication 1 ou 2, caractérisée en ce que le rapport numérique de la somme des roues mobiles (14 - 18, 26, 28, 32, 34, 52, 58, 60, 68, 70, 74, 76, 100 - 112, 116 - 122, 126, 128, 156 - 166, 178 - 182, 204 - 210, 218, 220, 230 -234) et des roues fixes (20, 30, 72, 78, 80, 124, 168, 184, 216, 236) prévues par rapport au nombre des paliers de vitesses est inférieur à 0.69.

4. Boîte de vitesses à changement de rapport par paliers et à plusieurs vitesses (2, 40, 82, 140, 190) selon au moins l'une des revendications 1 à 3, caractérisée en ce que des éléments de commande supplémentaires (G, L, N) peuvent être actionnés pour soutenir la transmission du couple et l'aiguillage du flux du couple.

5. Boîte de vitesses à changement de rapport par paliers et à plusieurs vitesses (2, 40, 82, 140, 190) selon au moins l'une des revendications 1 à 4, caractérisée en ce que pour l'enclenchement des paliers de marche arrière sont utilisés au moins partiellement les mêmes éléments de commande (A - P) que pour l'enclenchement des paliers de marche avant.

6. Boîte de vitesses à changement de rapport par paliers et à plusieurs vitesses (2, 40, 82, 140, 190) selon au moins l'une des revendications 1 à 5, caractérisée en ce que l'arbre menant (4, 42, 84, 142, 192) est monté horizontalement en dessous de l'arbre mené (13, 53, 54, 94, 150, 200).

7. Boîte de vitesses à changement de rapport par paliers et à plusieurs vitesses (2, 40, 82, 140, 190) selon au moins l'une des revendications 1 à 6, caractérisée en ce que les éléments de commande (A - R) sont des dispositifs de synchronisation.

8. Boîte de vitesses à changement de rapport par paliers et à plusieurs vitesses (2, 40, 82, 140, 190) selon au moins l'une des revendications 1 à 6, caractérisée en ce que les éléments de commande (A - R) sont des embrayages crabotés.

9. Boîte de vitesses à changement de rapport par paliers et à plusieurs vitesses (2, 40, 82, 140, 190) selon au moins l'une des revendications 1 à 6, caractérisée en ce que les éléments de commande (A - R) sont des embrayages hydrauliques.

10. Boîte de vitesses à changement de rapport par paliers et à plusieurs vitesses (2, 40, 82, 140, 190) selon au moins l'une des revendications 1 à 6, caractérisée en ce que les éléments de commande (A - R) sont des embrayages à disques.

11. Boîte de vitesses à changement de rapport par paliers et à plusieurs vitesses (2, 40, 82, 140, 190) selon la revendication 1, caractérisée en ce que la boîte de vitesses (2, 40)comporte huit paliers de marche avant et deux paliers de marche arrière.

12. Boîte de vitesses à changement de rapport par paliers et à plusieurs vitesses (2, 40, 82, 140, 190) selon une des revendications 1 à 3, caractérisée en ce que la boîte de vitesses (82) comporte seize paliers de marche avant et huit paliers de marche arrière.

13. Boîte de vitesses à changement de rapport par paliers et à plusieurs vitesses (2, 40, 82, 140, 190) selon une des revendications 1 à 3, caractérisée en ce que la boîte de vitesses (140) comporte seize paliers de marche avant et six paliers de marche arrière.

14. Boîte de vitesses à changement de rapport par paliers et à plusieurs vitesses (2, 40, 82, 140, 190) selon une des revendications 1 ou 2, caractérisée en ce que la boîte de vitesses (190) comporte seize paliers de marche avant et cinq paliers de marche arrière.
